# EUROPEAN PATENT APPLICATION

(11) **EP 1 826 241 A1**
(43) Date of publication of application: **29.08.2007**
(21) Application number: 05816408.8
(22) Date of filing: 14.12.2005
(51) Int. Cl.: C08L 67/04, C08K 5/1575, C08K 5/21, C08K 7/02, C08L 51/04, C08L 101/16

(54) **BIODEGRADABLE RESIN COMPOSITIONS AND MOLDED OBJECTS THEREOF**

(30) Priority: 15.12.2004 JP 2004363387; 15.12.2004 JP 2004363388; 26.04.2005 JP 2005128064; 26.04.2005 JP 2005128065
(71) Applicant: Kaneka Corporation, Kita-ku Osaka-shi, Osaka 530-8288 (JP)
(72) Inventor: HASHIMOTO, Yoshihiko, Ibaraki-shi, Osaka 5670071 (JP); AOYAMA, Taizo, Takasago-shi, Hyogo 6760025 (JP); NAKAMURA, Nobuo, Nishinomiya-shi, Hyogo 6620934 (JP); SUZUKI, Noriyuki, Kawanishi-shi, Hyogo 6660115 (JP)
(74) Representative: Vossius & Partner
(86) International application number: PCT/JP2005/022960
(87) International publication number: WO 2006/064846

(57) **Abstract**

The present invention has its object to provide a resin composition excellent in impact resistance, tensile properties and transparency using a plant-derived biodegradable polymer obtained by positive fixation of carbon dioxide on the earth and, moldings thereof, and, further, provide a resin composition and moldings thereof improved in processability and thermal stability.

The present invention relates to
a resin composition
which comprises
(A), an aliphatic polyester type biodegradable polymer and
(B) at least one copolymer selected from the group consisting of composite rubber graft copolymers (b1) and core-shell type graft copolymers (b2); or,

a resin composition
which comprises
(A) an aliphatic polyester type biodegradable polymer and
(C) at least one compound selected from the group consisting of sorbitol compounds (c1) having a particular chemical structure and urea bond-containing substituted urea compounds (c2).

## Description

### TECHNICAL FIELD

The present invention relates to a composition comprising a plant-derived biodegradable polymer which is obtained by positively fixing carbon dioxide on the earth, and expected to contribute toward the prevention of global warming, and to a molding thereof. The present invention also relates to a composition and a molding thereof excellent in processability, thermal stability, impact resistance, elasticity modulus and the like.

### BACKGROUND ART

While plastics are characterized by their processability and easy-to-use feature, they have so far been thrown away after use hereof because of the difficulty in reusing them and hygienic problems anticipated, and the like. However, in proportion to the increasing amounts of plastics used and thrown away, various problems arising from landfill with and incineration of waste plastics have come into the limelight. The global environment is now under heavy loads of waste plastics; the problems are: shortages of landfill sites, influences of nondegradable plastics remaining in the environment on the ecosystem, toxic gas generation upon incineration, and global warming due to a large quantity of heat of combustion generated upon incineration, and the like. Thus, in recent years, researchers have been actively engaged in the development of biodegradable plastics which are expected to be capable of solving the waste plastics-related problems.

Such biodegradable plastics are derived from plants which absorb carbon dioxide in the air and fix the same. The carbon dioxide generated upon combustion of these plant-derived biodegradable plastics is what was originally in the air, hence does not increase the amount of carbon dioxide in the air. This feature is referred to as "carbon neutral" and there is now a tendency toward attaching importance thereto. Carbon dioxide fixation is expected to be effective in preventing global warming and, in particular, since the parliament discussion was approved in Russia in August of 2003 for the ratification of the Kyoto Protocol setting the target levels of carbon dioxide reduction, it is fairly certain that the Protocol will come into force. Substances formed as a result of carbon dioxide fixation have attracted very great attention and the active use thereof has been desired.

On the other hand, aromatic polyesters are being produced and consumed in large amounts as general-purpose polymers. From the above-mentioned viewpoint of carbon dioxide fixation and global warming prevention and from the carbon neutral viewpoint as well, however, they are not favorable materials since they are produced from fossil fuels and therefore release carbon dioxide fixed till then under the ground into the atmosphere. For example, Patent Document 1 describes a polyester resin composition comprising an aromatic polyester and a composite rubber type graft copolymer incorporated therein which is the product of graft polymerization of one or more vinyl monomers onto a composite rubber having a structure such that a polyorganosiloxane rubber component and a poly[alkyl(meth)acrylate] rubber component entangled with each other so as not to separate from each other. However, this polyester resin composition is a material not favorable from the carbon neutral viewpoint.

Patent Document 2 describes a resin composition comprising a graft composite rubber and a polyester resin. The graft composite rubber is derived from a composite rubber comprising a polyorganosiloxane component and an alkyl (meth) acrylate rubber component by graft polymerization of one or more vinyl monomers onto the composite rubber and has a number average particle diameter of 0.01 to 0.07 µm, with the total volume of those particles which are greater in size than 0.10 µm not exceeding 20% of the total volume of all particles.

Patent Document 3 describes a thermoplastic resin composition comprising a polylactic acid type polymer and a graft copolymer obtained by using a polyorganosiloxane- and alkyl(meth)acrylate rubber-containing polyorganosiloxane/acrylic composite rubber. However, the above-mentioned resin composition comprising a graft composite rubber and a polyester resin and the thermoplastic resin composition just mentioned above are not satisfactory in the levels of biodegradability and physical properties.

On the other hand, as described in Patent Document 4 and 5, attempts have been made to improve the crystallization properties by adding a sorbitol to lactic acid polymerizates such as polylactic acid. However, any technology of improving the processability and/or thermal stability of such plant-derived biodegradable plastics as mentioned above has not been disclosed as yet.

As described in Patent Document 6 and 7, attempts have been made to improve the crystallization properties by adding an amide compound or a urea type compound to a lactic acid-derived polymer such as polylactic acid. However, any technology of improving the processability and/or thermal stability of such plant-derived biodegradable plastics has not been disclosed as yet.
Patent Document 1: Japanese Kokai Publication Sho-62-121752
Patent Document 2: Japanese Kokai Publication Hei-06-166803
Patent Document 3: Japanese Kokai Publication 2004-285258
Patent Document 4: Japanese Kokai Publication Hei-10-158369
Patent Document 5: Japanese Kokai Publication Hei-1-10-101919
Patent Document 6: Japanese Kokai Publication Hei-09-278991
Patent Document 7: Japanese Kokai Publication Hei-11-005849

### SUMMARY OF THE INVENTION

An object of the present invention, in a first aspect thereof, is to provide a resin composition excellent in impact resistance, tensile properties and transparency using a plant-derived biodegradable polymer obtained by positive fixation of carbon dioxide on the earth and, moldings thereof, and further, provide a resin composition and moldings thereof excellent in impact resistance, tensile properties, elasticity modulus in bending, thermal stability, and the like, by further incorporating a filler and/or the like.

In a second aspect, it is an object of the invention to provide a composition and moldings thereof effective in global warming prevention and in attaining carbon neutrality and improved in processability and thermal stability by admixing at least one compound selected from the group consisting of specific sorbitol compounds and specific substituted urea compounds with a plant-derived biodegradable polymer obtained by positive fixation of carbon dioxide on the earth.

### DETAILED DISCRIPTION OF THE INVENTION

As a result of intensive investigations made by them in an attempt to accomplish the above objects, the present inventors found that a resin composition and moldings thereof excellent in impact resistance, tensile properties and transparency can be obtained by admixing at least one copolymer selected form the group consisting of specific composite rubber-based graft copolymers and specific core-shell type graft copolymers with an aliphatic polyester type biodegradable polymer obtained by positive fixation of carbon dioxide on the earth and, further, that a resin composition and moldings thereof excellent in impact resistance, tensile properties, elasticity modulus in bending and thermal stability can be obtained by further incorporation of a filler and/or the like. These findings have now led to completion of the present invention in the first aspect thereof.

The present inventors further found that when at least one compound selected from the group consisting of specific sorbitol compounds and specific substituted urea compounds is incorporated into a plant-derived aliphatic polyester type biodegradable polymer, which is the principal component, a resin composition and moldings thereof improved in mold release properties, reduced in molding time and improved in processability and in thermal stability can be obtained. This and other findings have now led to completion of the present invention in the second aspect thereof.

Thus, in a first mode of practice of the invention in the first aspect thereof the present invention relates to
a resin composition
which comprises
(A) an aliphatic polyester type biodegradable polymer and
(B) at least one copolymer selected from the group consisting of composite rubber graft copolymers (b1) and core-shell type graft copolymers (b2),
in which the composite rubber graft copolymers (b1) are copolymers resulting from graft polymerization of a vinyl monomer(s) onto a composite rubber composed of a polyorganosiloxane component and a poly[alkyl(meth)acrylate] component,
in which each particle of the core-shell type graft copolymers (b2) comprise an acrylic rubber as the core layer-and a vinyl monomer(s)-derived polymer as the shell layer and
in which the resin composition comprises 50 to 99% by weight of the component (A) and 50 to 1% by weight of the component (B), relative to the total weight (100% by weight) of the component (A) and component (B).

In the above resin composition, the aliphatic polyester type biodegradable polymer is preferably a biodegradable (3-hydroxyalkanoate) copolymer composed of repeating units represented by the formula: [-CHR-CH₂-CO-O-] (wherein R represents an alkyl group represented by CₙH₂ₙ₊₁ in which n is an integer of 1 to 15).

The above-mentioned (3-hydroxyalkanoate) copolymer is preferably poly[(3-hydroxybutyrate)-co-(3-hydroxyhexanoate)] composed of (3-hydroxybutyrate) repeating units and (3-hydroxyhexanoate) repeating units.

The (3-hydroxyalkanoate) copolymer preferably has a weight average molecular weight of 300,000 to 3,000,000.

The repeating unit content ratio in the poly[(3-hydroxybutyrate)-co-(3-hydroxyhexanoate)], namely the ratio (3-hydroxybutyrate) units/(3-hydroxyhexancate) units, is preferably 99/1 to 80/20 (mol/mol).

The vinyl monomer(s) in the composite rubber graft copolymers (b1) preferably comprises or comprise 70 to 100% by weight of at least one vinyl monomer selected from the group consisting of vinyl cyanide monomers, aromatic vinyl monomers, acrylate esters and methacrylate esters and 30 to 0% by weight of another or other vinyl monomers copolymerizable therewith.

The difference in refractive index between the core-shell type graft copolymers (b2) and the aliphatic polyester type biodegradable polymer is preferably not greater than 0.02.

Preferably, the resin composition further comprises, as a nucleating agent, at least one compound selected from the group consisting of higher fatty acid amides, urea derivatives and sorbitol compounds in an amount, of 0.1 to 10 parts by weight relative to the total weight (100 parts by weight) of the component (A) and component (B).

The resin composition preferably has an average crystalline particle diameter of not greater than 50 µm.

Preferably, the resin composition further comprises 0.1 to 100 parts by weight of a filler relative to the total weight (100 parts by weight) of the component (A) and component (B).

In a second mode of practice of the invention in the first aspect thereof, the invention relates to an injection molding, extrusion molding, blow molding, expansion molding, film and sheet-like molding formed from the above-defined resin composition as well as a vacuum molding or press molding formed from the above moldings.

In the second aspect thereof, the present invention relates to
a resin composition
which comprises
(A) an aliphatic polyester type biodegradable polymer and
(C) at least one compound selected from the group consisting of sorbitol compounds (c1) having a chemical structure represented by the general formula (1): 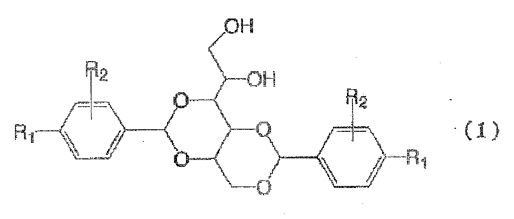 (wherein R₁ and R₂ may be the same or different and each independently represents a hydrogen atom, a halogen atom(s) selected from the group consisting of F, Cl and Br, or an alkyl or alkoxy group containing 1 to 6 carbon atoms which alkyl or alkoxy group may optionally be substituted at least partly by a hydroxyl group(s) and/or a halogen atom(s) selected from the group consisting of F, Cl and Br), and urea bond-containing substituted urea compounds (c2).

Preferred as the sorbitol compounds (c1) to be contained in the above resin composition are one or more species selected from among bisbenzylidenesorbitol, bis (p-methylbenzyliden)sorbitol, bis(p-ethylbenzylidene)sorbitol and bis(p-chlarabenzylidene)sorbitol

Preferred as the substituted urea compounds (c2) are one or more species selected from among xylylenebisstearylurea, toluylenebisstearylurea, hexamethylenebisstearylurea and diphenylmethanebisstearylurea.

The content of the (C) component is preferably 0.1 to 5 parts by weight per 100 parts per weight of the aliphatic polyester type biodegradable polymer.

The aliphatic polyester type biodegradable polymer (A) is preferably a poly (3-hydroxyalkanoate) copolymer produced by a microorganism and composed of repeating units represented by the formula: [-CHR-CH₂-CO-O-] (wherein R represents an alkyl group represented by CₙH₂ₙ₊₁ in which n is an integer of 1 to 15).

The poly(3-hydroxyalkanoate) copolymer is preferably poly[(3-hydroxybutyrate)-co-(3-hydroxyhexanoate)] composed of (3-hydroxybutyrate) repeating units and (3-hydroxyhexanoate) repeating units.

The copolymer component content ratio in the poly[(3-hydroxybutyrate)-co-(3-hydroxyhexanoate)], namely the ratio poly(3-hydroxybutyrate)/poly(3-hydroxyhexanoate), is preferably 99/1 to 80/20 (mol/mol).

Preferably, 0.1 to 100 parts by weight, per 100 parts by weight of the aliphatic polyester type biodegradable polymer, of an inorganic filler are incorporated in the above composition.

Preferably, 0.1 to 100 parts by weight, per 100 parts by weight of the aliphatic polyester type biodegradable polymer, of natural fibers are incorporated in the above composition.

Preferably, the natural fiber is Kenaf fiber.

In the following, the present invention is described in detail.

### <First aspect of the invention>

The aliphatic polyester type biodegradable polymer, namely the component (A) to be used in the practice of the invention, is not particularly restricted but specifically includes, for example, (1) aliphatic polyesters produced by microorganisms, for example polyhydroxyalkanoates, and (2) chemically synthesized aliphatic polyesters such as poylactic acid (hereinafter sometimes referred to as "PLA type") and polycaprolactone.

Preferred as the aliphatic polyester type biodegradable polymer, namely the component (A) to be used in the practice of the invention, are polyhydroxyalkanoate polymers (1), in particular poly(3-hydroxyalkanoate) (hereinafter sometimes referred to as "P3HA") type aliphatic polyesters produced by microorganisms, because of their excellent properties, namely they are excellent in degradability in both aerobic and anaerobic environments, will never generate any toxic gases upon combustion, are plastics derived from microorganisms utilizing plant materials and can be rendered high in molecular weight, and will never increase the carbon dioxide level on the earth, namely are carbon neutral. The P3HAs are classified among aliphatic polyesters but greatly differ in polymer properties from the above-mentioned chemically synthesized aliphatic polyesters; their performance properties worthy of special mention are their degradability under anaerobic conditions, superiority in moisture resistance and possibility of acquiring increased molecular weights. More specifically, the aliphatic polyester type biodegradable polymer includes, as preferred species, biodegradable (3-hydroxyalkanoate) copolymers composed of the repeating units represented by the formula: [-CHR-CH₂-CO-O-] (wherein R represents an alkyl group represented by CₙH₂ₙ₊₁ in which n is an integer of 1 to 15).

As typical examples of the biodegradable (3-hydroxyalkanoate) copolymers, there may be mentioned [(3-hydroxybutyrate)-(3-hydroxyhexanoate)] copolymers, [(3-hydroxybutyrate)-(3-hydroxyoctanoate)] copolymers, [(3-hydroxybutyrate)-(3-hydroxydecanoate)] copolymers, and the like. Among these, poly[(3-hydroxybutyrate)-co-(3-hydroxyhexanoate)] copolymers composed of (3-hydroxybutyrate) repeating units and (3-hydroxyhexanoate) repeating units, and those copolymers which are produced by microorganisms are more preferred. If necessary, further addition may be made of one or more aliphatic polyesters such as poly(glycolic acid), poly(lactic acid), poly(3-hydroxybutyric acid), poly(4-hydroxybutyric acid), poly(4-hydroxyvaleric acid), poly(3-hydroxyhexanoic acid), polycaprolactone and, further, polymers derived from an aliphatic polybasic carboxylic acid and an aliphatic polyhydric alcohol as main constituents, such as poly(ethylene adipate), poly(ethylene succinate), poly(butylene adipate) and poly(butylene succinate), and copolymers thereof.

The term "poly[(3-hydroxybutyrate)-co-(3-hydroxyhexanoate)]] is used herein to collectively refer to copolymers comprising 3-hydroxybutyrate and 3-hydroxyhexanoate as main constituents. The copolymers may further comprise another or other monomer components such as those mentioned above so long as their main constituents are 3-hydroxybutyrate and 3-hydroxyhexanoate. The polymerization method for obtaining such copolymers is not particularly restricted but any copolymerization method, for example random copolymerization, alternating copolymerization or block copolymerization, may be employed, although, the random copolymerization method is preferred to thereby obtain random copolymers.

In the practice of the invention, the melting point, thermal stability, flexibility and other physical properties of the poly[(3-hydroxybutyrate)-co-(3-hydroxyhexanoate)] [PHBH] can be modified by controlling the composition ratio between the constituent repeating units. The repeating unit composition ratio, namely the (3-hydroxybutyate) units/(3-hydroxyhexanoate) units ratio, in the poly[(3-hydroxybutyrate)-co-(3-hydroxyhexanoate)] is preferably 99/1 to 80/20 (mol/mol), more preferably 98/2 to 82/18 (mol/mol), still more preferably 97/3 to 85/15 (mol/mol).

The molecular weight of the aliphatic polyester type biodegradable polymer to be used in the practice of the invention is not particularly restricted but the weight average molecular weight is preferably 300,000 to 3,000,000, more preferably 400,000 to 2,500,000, still more preferably 500, 000 to 2,000,000. When the weight average molecular weight is lower than 300,000, the mechanical properties, such as strength features, may be insufficient and, when it is above 3,000,000, the moldability may be poor.

The method of determining the weight average molecular weight is not particularly restricted but, in an example, the weight average molecular weight of the resin composition of the invention can be determined in terms of a polystyrene equivalent molecular weight by using chloroform as the mobile phase, a Waters GPC system as the system, and Showa Denko K.K.'s Shodex K-804 (polystyrene gel) as the column.

The composite rubber graft copolymers (b1) and core-shell type graft copolymers (b2) each serving as the component (B) are now described.

The composite rubber graft copolymers (b1) are copolymers produced by graft polymerization of a vinyl monomer(s) onto a composite rubber consisting of a polyorganosiloxane component and a poly[alkyl(meth)acrylate] component.

The polyorganosiloxane component is the component constituting the main silicone rubber chain skeleton and includes linear and cyclic ones. From the viewpoint of applicability to emulsion polymerization systems and of economy, cyclic organosiloxanes are preferred. Specific examples thereof are, for example, 6- to 12-membered ones such as hexamethylcyclotrisiloxane, octamethylcyclotetrasiloxane, decamethylcyclopentasiloxane, dodecamethylcyclohexasiloxane, trimethyltriphenylcyclotrisiloxane, tetramethyltetraphenylcyclotetrasiloxane, ocataphenylcyclotetrasiloxane and the like. These may be used singly or in combination of two or more of them. The component may also be obtained by copolymerization with a crosslinking agent and/or a graft coupling agent used according to need.

The crosslinking agent is a component copolymerizing with the organosiloxane and introducing crosslinked structures into the silicone rubber to provide the same with rubber elasticity. As specific examples thereof, there may be mentioned, for example, tetramethoxysilane, tetraethoxysilane, triethoxymethylsilane, triethoxyethylsilane, butyltrimethoxysilane, propyltrimethoxysilane, octyltrimethoxysilane and like tetrafunctional or trifunctional silane compounds. These may be used singly or in combination of two or more of them.

The graft coupling agent is a reactive silane compound containing a polymerizable unsaturated bond or a mercapto group within the molecule thereof, an organosiloxane containing a polymerizable unsaturated bond or a mercapto group within the molecule thereof, or the like. It is a component for introducing the polymerizable unsaturated bond or mercapto group into a side chain(s) and /Or a terminus or termini of the copolymer by reacting with the above-mentioned organosiloxane or crosslinking agent. The polymerizable unsaturated bonds or mercapto groups serve as active sites for grafting of the vinyl monomer(s) to be graft copolymerized as used in the practice of the invention. The polymerizable unsaturated bonds or mercapto groups also serve as crosslinking sites in the radical reaction using a radial polymerization initiator. Even when crosslinking is caused by the radical reaction, the bonds or groups partly remain as active sites for grafting, hence grafting is possible.

As specific examples of the reactive silane compound containing a polymerizable unsaturated bond within the molecule, there may be mentioned, for example, β-methacryloyloxyethyldimethoxymethylsilane, γ-methacryloxypropyldimethoxymethylsilane γ-methacryloyloxypropyltrimethoxysilane, γ-methacryloyloxypropyldimethylmethoxysilane, γ-methacryloyloxypropyltriethoxysilane, γ-methacryloyloxypropyldiethoxymethylsilane, γ-methacryloyloxypropyltripropoxysilane, γ-methacryloyloxypropyldipropoxymethylsilane, p-vinylphenyldimethoxymethylsilane, p-vinylphenyltrimethoxysilane, p-vinylphenyltriethoxysilane, p-vinylphenyldiethoxymethylsilane, vinylmethyldimethoxysilane, vinylmethyldiethoxysilane, vinyltrimethoxysilane, vinyltriethoxysilane, allylmethyldimethoxysilane, allylmethyldiethoxysilane, allyltrimethoxysilane, allyltriethoxysilane and the like.

As the mercapto group-containing reactive silane compound, there may be mentioned mercaptopropyltrimethoxysilane, mecarptopropyldimethoxymethylsilane, and the like.

The quantity relations among the organosiloxane, crosslinking agent, graft coupling agent and other organosilane are generally such that the silicone rubber component in the silicone rubber latex (a) is made from 70 to 99.9%, preferably 85 to 99.5%, of the organosiloxane, 0 to 10%, preferably 0 to 5%, of the crosslinking agent, 0 to 10%, preferably 0.3 to 5%, of the graft coupling agent, and 0 to 10%, preferably 0 to 5%, of the other organosilane, with the sum of the four being 100%. Preferably, both of the amounts of the crosslinking agent and graft coupling agent are not simultaneously equal to zero but at least one of them is used in an amount of not smaller than 0.1%. When the proportion of the organosiloxane is too small, the desired rubber-like properties will not be attained and the impact resistance-manifesting effect may possibly become decreased and when it is excessively large, the proportions of the crosslinking agent, graft coupling agent and other organosilane become excessively small and the effects of the use thereof tend to be hardly produced. Furthermore, when the proportions of the crosslinking agent and/or graft coupling agent units are too small, their impact resistance-manifesting effects will become insignificant and when they are excessively large, the desired rubber-like properties will not be obtained and the impact resistance-manifesting effects tend to be produced only to a lesser extent.

The organosiloxane is preferably in the form of a rubber latex, which can be produced by emulsifying and dispersing a mixture thereof with the crosslinking agent and/or graft coupling agent optionally used and optionally further with the other organosilane in water by means of mechanical shearing in the presence of an emulsifier and carrying out the polymerization in an acidic condition. The silicone rubber obtained after polymerization preferably has an average particle diameter within the range of 20 to 600 nm.

The emulsifier to be used in the organosiloxane latex is one that will not lose its activity as an emulsifier within the acidic range. Examples of such emulsifier are, for example, alkylbenzenesulfonic acids, sodium alkylbenzenesulfonates, alkylsulfonic acids, sodium alkylsulfonates, sodium (di)alkyl sulfosuccinates, sodium polyoxyethylene nonylphenyl ether-sulfonates, sodium alkylsulfates and the like. These may be used singly or two or more of them may be used in combination.

The acidic condition is preferably produced by adding to the system an inorganic acid, such as sulfuric acid or hydrochloric acid, or an organic acid, such as an alkylbenzenesulfonic acid, an alkylsulfonic acid or trifluoroacetic acid, so as to adjust the pH to 1.0 to 3.0.

From the proper polymerization rate viewpoint, the polymerization temperature for the production or the silicone rubber latex is preferably 60 to 120°C, more preferably 70 to 100°C.

The poly[alkyl(meth)acrylate] to be used in the practice of the invention is a polymer obtained by polymerizing a monomer component comprising a (meth) acrylic acid alkyl ester monomer(s) as the main component(s). The polymer may be a polymer obtained by copolymerizing, according to need, a monomer mixture comprising a polyfunctional monomer containing two or more polymerizable unsaturated bonds within the molecule and/or another copolymerizable monomer(s) and/or the like together with the main component (meth) acrylic acid alkyl ester monomer(s). The method of polymerization for the production of the poly[alkyl(meth)acrylate] species is not particularly restricted but may be, for example, the method comprising carrying out the polymerization in the manner of ordinary emulsion polymerization using a radical polymerization initiator, if necessary together with a chain transfer agent (e.g. the method described in Japanese Kokai Publication Sho-50-88169 or Japanese Kokai Publication Sho-61-141746). The term "(meth)acrylate" as used herein includes both acrylates and methacrylates.

The (meth) acrylic acid alkyl ester monomer(s) is (are) the component(s) forming the main skeleton of the poly[alkyl(meth)acrylate] component. As specific example thereof, there may be mentioned acrylic acid alkyl esters having an alkyl group containing 1 to 12 carbon atoms, such as methyl acrylate, ethyl acrylate, propyl acrylate, butyl acrylate and 2-ethylhexyl acrylate, methacrylic acid alkyl esters having an alkyl group containing to 12 carbon atoms, such as 2-ethylhexyl methacrylate and lauryl methacrylate, and the like. These monomers may be used singly or two or more of them may be used in combination. Among the (meth)acrylic acid alkyl ester monomer components mentioned above, those containing 40 to 100% of butyl acrylate are preferred, and those containing 60 to 100% of butyl acrylate are more preferred, from the viewpoint that the polymers obtained have a low glass transition temperature and from the economy viewpoint. In this case, the copolymer-forming component(s) other than butyl acrylate may be, for example, methyl acrylate, ethyl acrylate and/or 2-ethylhexyl acrylate and the like.

The polyfunctional monomer containing two or more polymerizable unsaturated bonds within the molecule is a component used to introduce crosslinked structures into the pooly[alkyl(meth)acrylate] component particles for the formation of network structures for the manifestation of rubber elasticity and at the same time to provide active sites for grafting of the vinyl monomer(s) to be graft-polymerized. As specific examples thereof, there may be mentioned diallyl phthalate, triallyl cyanurate, triallyl isocyanurate, allyl methacrylate, allyl acrylate, ethylene glycol dimethacrylate, propylene glycol dimethacrylate, 1,3-butylene glycol dimethacrylate, 1,4-butylene glycol dimethacrylate, divinylbenzene and the like. These may be used singly or two or more of them may be used in combination. Among these, allyl methacrylate, triallyl cyanurate and triallyl isocyanurate are preferred from the viewpoint of good crosslinking efficiency and grafting efficiency.

In producing the poly[alkyl(meth)acrylate] component, the (meth)acrylic acid alkyl ester monomer(s) is preferably used in an amount of 66.5 to 99.9% by weight, more preferably 85 to 99.9% by weight, relative to the total weight (100% by weight) of the (meth)acrylic acid alkyl ester monomer(s), the polyfunctional monomer containing two or more polymerizable unsaturated bonds within the molecule and the other copolymerizable monomer. The polyfunctional monomer containing two or more polymerizable unsaturated bonds within the molecule is preferably used in an amount of 0.1 to 10% by weight, more preferably 0.1 to 5% by weight. Furthermore, the other copolymerizable monomer is preferably used in an amount of 0 to 20% by weight, more preferably 0.1 to 5% by weight. These components are used so that the sum total thereof may amount to 100% by weight. When the proportion of the (meth) acrylic acid alkyl ester monomer(s) is too small, the desired rubber-like properties may be insufficient and the impact resistance-manifesting effect may possibly become decreased. When it is excessively high, the proportion of the polyfunctional monomer containing two or more polymerizable unsaturated bonds within the molecule becomes too small, hence the effects of the use thereof tend to become insufficient. When the proportion of the polyfunctional monomer containing two or more polymerizable unsaturated bonds within the molecule is too small, the crosslink density is so low that the impact resistance-manifesting effect may become low and, when it is too high, the crosslink density conversely becomes excessive and the impact resistance also tends to decrease. The other copolymerizable monomer is a component used for adjusting the refractive index and impact resistance, for example, and can be added according to need to attain the desired physical properties. As examples thereof, there may be mentioned, for example, methyl methacrylate, ethyl methacrylate, propyl methacrylate, glycidyl methacrylate, glycidyl acrylate, hydroxyethyl methacrylate, benzyl methacrylate, methacrylic acid, acrylic acid, styrene, substituted styrenes, acrylonitrile and the like.

The composite rubber composed of the polyorganosiloxane component and poly[alkyl(meth)acrylate] component can be obtained, for example, by seed polymerizing the monomer mixture for producing the poly[alkyl(meth)acrylate] component in the presence of the polyorganosiloxane rubber latex mentioned above. Conversely, it can also be obtained by adding and polymerizing the components to be used for the production of the silicone rubber latex, either as such or in the form of an emulsion, in the presence of the poly [alkyl (meth) acrylate] component rubber latex. Furthermore, the composite rubber can be obtained by mixing the polyorganosiloxane component rubber latex with the poly[alkyl(meth)acrylate] component rubber latex and adding to the resulting mixture 0.1 to 15 parts by weight (as solid matter), per 100 parts by weight (as solid matter) of the latex mixture, of an acid group-containing copolymer latex prepared by copolymerizing 1 to 30% by weight of an unsaturated acid monomer(s), 35 to 99% by weight of a (meth)acrylate ester monomer(s) and 0 to 35% by weight of another monomer or other monomers copolymerizable therewith, to thereby cause flocculation and coalescence.

The quantity ratio between the polyorganosiloxane component and poly[alkyl(meth)acrylate] component is preferably 5/95 to 90/10 by weight, more preferably 10/90 to 50/50 by weight. When the quantity ratio of the polyorganosiloxane component is too small, the conversion through polymerization will decrease and the unreacted polyorganosiloxane component will remain in large amounts and, thus, the production efficiency tends to decrease. When it is excessive, the proportion of the polyorganosiloxane component in the composite rubber particles obtained becomes excessive and the impact resistance tends to decrease.

The average particle diameter of the composite rubber particles is preferably 0.02 to 1.1 µm, more preferably 0.03 to 1 µm, from the impact resistance manifestation viewpoint.

The gel content of the composite rubber particles is preferably not lower than 70%, more preferably not lower than 80%, from the impact resistance manifestation viewpoint.

The vinyl monomer to be used in graft polymerization onto the composite rubber is not particularly restricted but, as preferred specific examples, there may be mentioned cyanovinyl monomers such as acrylonitrile and methacrylonitrile, aromatic vinyl monomers such as styrene, α-methylstyrene and paramethylstyrene, acrylate esters such as methyl acrylate, butyl acrylate, glycidyl acrylate and hydroxyethyl acrylate, methacrylate esters such as methyl methacrylate, ethyl methacrylate, butyl methacrylate, glycidyl methacrylate, hydroxyethyl methacrylate, and the like. These may be used singly or two or more of them may be used in combination.

In the practice of the invention, the vinyl monomer preferably comprises 70 to 100% by weight of at least one vinyl monomer selected from the group consisting of cyanovinyl monomers, aromatic vinyl monomers, acrylate esters and methacrylate esters and 30 to 0% by weight of another vinyl monomer copolymerizable therewith. As the other vinyl monomer copolymerizable with at least one vinyl monomer selected from the group consisting of cyanovinyl monomers, aromatic vinyl monomers, acrylate esters and methacrylate esters, there may be mentioned maleic anhydride, phenylmaleimide, methacrylic acid, acrylic acid, and the like. These may be used singly or two or more of them may be used in combination. More preferably, the vinyl monomer comprises 80 to 100% by weight of at least one vinyl monomer selected from the group consisting of cyanovinyl monomers, aromatic vinyl monomers, acrylate esters and methacrylate esters and 20 to 0% by weight of the other vinyl monomer copolymerizable therewith, particularly preferably it comprises 90 to 100% by weight of the above-mentioned vinyl monomer and 10 to 0% by weight of the other vinyl monomer copolymerizable therewith.

In the practice of the invention, the quantity ratio between the composite rubber particles and the above-mentioned vinyl monomer, namely the composite rubber particles/vinyl monomer weight ratio, is preferably 5/95 to 95/5, more preferably 10/90 to 90/10. When the quantity of the vinyl monomer is too large, the rubber component content becomes too low and the impact resistance manifestation tends to become insufficient and, when it is too small, the quantity of the grafting monomer is insufficient and the resulting graft copolymer, when compounded with a thermoplastic resin, which is the matrix resin, shows poor compatibility with the thermoplastic resin and, accordingly, the impact resistance also tends to decrease.

The above-mentioned graft polymerization can be carried out by using the conventional emulsion polymerization method. The radical polymerization initiator and/or chain transfer agent to be used in the polymerization may be conventional ones.

Furthermore, the so-called free polymer prepared by polymerizing the vinyl monomer in a separate polymerizer may be added to the graft polymer or it may be added on the occasion of compounding the aliphatic polyester type biodegradable polymer (preferably a [(3-hydroxybutyrate)-co-(3-hydroxyhexanoate)] copolymer) with the composite rubber graft copolymer (b1). The graft composition and the free polymer composition may be the same or different but, when they are different, it is desirable from the physical properties viewpoint that both the compositions be compatible with each other.

In compounding with the aliphatic polyester type biodegradable polymer (preferably a [(³-hydroxybutyrate)-co-(3-hydroxyhexanoate)] copolymer), the graft copolymer particles after polymerization may be used either in the form of a polymer separated from the emulsion or in the form of the emulsion as such. As the method of polymer separation, there may be mentioned, the conventional methods, for example, the method comprising adding a metal salt, such as calcium chloride, magnesium chloride or magnesium sulfate, to the emulsion to thereby cause coagulation, followed by separation, washing with water, dehydration and drying. The spray drying method can also be used.

The core-shell type graft copolymers (b2) are now described.

Each core-shell type graft copolymer (b2) to be used in the practice of the invention comprises an acrylic rubber as the core layer and a vinyl monomer-derived polymer as the shell layer. When the resin composition contains this component, the impact resistance/transparency balance can be improved without scarifying the physical and chemical properties of the aliphatic polyester type biodegradable polymer.

The acrylic rubber forming the core layer of the graft copolymer may exhibit a layer structure comprising only one layer or a multilayer structure comprising two or more layers. Similarly, the shell layer-forming polymer may have a layer structure comprising only one layer or a multilayer comprising two or more layers. Generally, the core-shell graft polymers are obtained by graft copolymerization of a monomer mixture onto a rubber-like polymer and, in most cases, they are obtained by graft polymerization of a monomer mixture in the presence a rubber latex containing an acrylic rubber as the solid matter.

The core layer-forming acrylic rubber is preferably a polymer obtained by polymerizing a monomer mixture containing 50 to 100% by weight of an acrylic acid alkyl ester monomer(s), with the total weight of the acrylic rubber-constituting monomers being taken as 100% by weight. Where necessary, the monomer mixture may contain, as another component, 0 to 50% by weight of a monomer selected from the group consisting of aromatic vinyl monomers and vinyl monomers copolymerizable with the acrylic acid alkyl ester monomers and/or aromatic vinyl monomers. It may further contain 0 to 5% by weight of a polyfunctional monomer according to need. When such a monomer mixture is subjected to emulsion polymerization, for example, an acrylic rubber-containing rubber latex can be obtained. When the acrylic rubber is obtained by emulsion polymerization, the acrylic rubber in the form of the rubber latex, namely in the form dispersed in an aqueous medium, can be subjected to graft copolymerization with the monomer mixture.

The acrylic acid alkyl ester monomer includes as specific examples thereof, but is not limited to, acrylic acid alkyl esters having an alkyl group containing 1 to 8 carbon atoms, such as methyl acrylate, ethyl acrylate, butyl acrylate and 2-ethylhexyl acrylate. At least one of these is used.

The acrylic acid alkyl ester monomer is preferably used in an amount of 50 to 100% by weight, more preferably 60 to 95% by weight, still, more preferably 65 to 95% by weight, with the total weight of the acrylic rubber-constituting monomers being taken as 100% by weight. When it is used in an amount smaller than 50% by weight, the impact resistance of the final product moldings may not be improved in some instances.

The aromatic vinyl monomers are effective in improving the transparency of the moldings finally obtained from the biodegradable aliphatic polyester resin composition of the invention and are components for adjusting the difference in refractive index between the graft polymer and biodegradable aliphatic polyester resin so that the difference may be minimized. The aromatic vinyl monomers include as specific examples thereof, but are not limited to, styrene, α-methylstyrene, 1-vinylnaphthalene, 2-vinylnaphthalene and the like. In refractive index adjustment, the aromatic vinyl monomers may be used or may not be used.

For the purpose of increasing the transparency, the difference in refractive index between the core-shell type graft copolymers (b2) to be used in the practice of the invention and the aliphatic polyester type biodegradable polymer is preferably not greater than 0.02. More preferably, the difference is not greater than 0.017.

The aromatic vinyl monomers may be used in an amount within the range of 0 to 50% by weight, with the total weight of the acrylic rubber-constituting monomers being taken as 100% by weight. Amounts exceeding 50% by weight cause decreases in the relative amount of the acrylic acid alkyl ester monomer, making it difficult to obtain acrylic rubbers excellent in impact resistance, hence are not preferred. When importance is attached to the impact strength, the amount in question is preferably 0 to 25% by weight, more preferably 0% by weight.

The vinyl monomer copolymerizable with the acrylic acid alkyl ester monomer and/or aromatic vinyl monomer is a component for finely adjusting the compatibility between the graft polymer and biodegradable aliphatic polyester resin. The vinyl monomer copolymerizable with those includes as specific examples thereof, but is not limited to, methacrylic acid alkyl esters having an alkyl group containing 1 to 20 carbon atoms, such as methyl methacrylate, ethyl methacrylate and butyl methacrylate, cyanovinyl monomers such as acrylonitrile and methacrylonitrile, 4-hydroxybutyl acrylate, and the like.

The vinyl monomer copolymerizable with the acrylic acid alkyl ester monomer and/or aromatic vinyl monomer may be used in an amount within the range of 0 to 50%, with the total weight of the acrylic rubber-constituting monomers being taken as 100% by weight. The amount is preferably 0 to 10% by weight, more preferably 0% by weight. When the amount is above 50% by weight, the proportion of the acrylic acid alkyl ester monomer becomes relatively small and the desired acrylic rubber excellent in impact resistance may hardly be obtained.

The polyfunctional monomer is a component for forming crosslinked structures in the acrylic rubber to be obtained. The polyfunctional monomer includes as specific examples thereof, but is not limited to, divinylbenzene, allyl acrylate, allyl methacrylate, diallyl phthalate, triallyl cyanurate, triallyl isocyanurate, diacrylate compounds and dimethacrylate compounds, and the like. Also usable as the polyfunctional monomer are molecules called macromers and containing radical polymerizable functional groups at both ends, for example α,ω-dimethacryloyloxypolyoxyethylene and the like.

The polyfunctional monomer may be used in an amount within the range of 0 to 5% by weight, with the total weight of the acrylic rubber-constituting monomers being taken as 100% by weight. The amount is preferably 0.1 to 3% by weight. Amounts exceeding 5% by weight make the proportion of the acrylic acid alkyl ester monomer relatively small and make it difficult to obtain the desired acrylic rubber excellent in impact resistance, hence are not preferred.

The method of obtaining the acrylic rubber is not particularly restricted but, for example, the method comprising adding an aqueous medium, a polymerization initiator, an emulsifier and the like to a monomer mixture comprising the acrylic acid alkyl ester monomer, the aromatic vinyl monomer, the vinyl monomer copolymerizable with these, and the polyfunctional monomer in respective desired amounts and carrying out the polymerization in the conventional manner of emulsion polymerization, for example, to obtain the acrylic rubber in the form contained in a rubber latex can be employed.

The addition and polymerization of the monomer mixture in obtaining the acrylic rubber may be carried out in one step or in a multistage manner, without any particular restriction. The addition of the monomer mixture may be carried out all at once or continuously or in two or more stages, or in the manner of combination of these, without any particular restriction.

The vinyl monomer composition can also be prepared in the form of micelles by introducing the acrylic acid alkyl ester monomer, the aromatic vinyl monomer, the vinyl monomer copolymerizable with these, and the polyfunctional monomer each separately, or some of them combinedly, into a reaction vessel containing the aqueous medium, initiator, emulsifier and the like introduced therein in advance, followed by mixing with stirring in the reaction vessel. In this case, the reaction vessel inside is then placed under the conditions under which the polymerization can be initiated, and the vinyl monomers are polymerized in the conventional manner of emulsion polymerization, for example, whereby an acrylic rubber can be obtained in the condition contained in a rubber latex.

The thus-obtained acrylic rubber preferably has a glass transition temperature not exceeding 0°C, more preferably not exceeding -30°C. When the glass transition temperature exceeds 0°C, the moldings finally obtained cannot always absorb the impact resulting from exposure to a great rate of deformation; this is unfavorable.

The shell layer-constituting vinyl monomer is not particularly restricted but includes, for example, cyanovinyl monomers, aromatic vinyl monomers, acrylate esters, methacrylate esters and the like. The shell layer may comprise a polymer derived from a single vinyl monomer or a polymer derived from a monomer mixture consisting of a plurality of vinyl monomers. Preferably, the polymer is one derived from 70 to 100% by weight of at least one vinyl monomer selected from the group consisting of cyanovinyl monomers, aromatic vinyl monomers, acrylate esters and methacrylate esters and 0 to 30% by weight of another vinyl monomer copolymerizable with the above-mentioned vinyl monomers. More preferably, it is one derived from 10 to 100% by weight of a methacrylic acid alkyl ester monomer, 0 to 60% by weight of an acrylic acid alkyl ester monomer, 0 to 90% by weight of an aromatic vinyl monomer, 0 to 40% by weight of a cyanovinyl monomer and 0 to 20% by weight of a vinyl monomer copolymerizable with these, the total weight being 100% by weight.

The methacrylic acid alkyl ester monomer is a preferred component for improving the adhesion of the graft polymer to the aliphatic polyester type biodegradable polymer and improving the impact-resisting strength of the finally obtained moldings of the invention. The methacrylic acid alkyl ester monomer includes as specific examples thereof, but is not limited to, methacrylic acid alkyl esters having an alkyl group containing 1 to 5 carbon atoms, such as methyl methacrylate, ethyl methacrylate and butyl methacrylate.

The methacrylic acid alkyl ester monomer can be used preferably in an amount within the range of 10 to 100% by weight, with the total weight of the vinyl monomers being taken as 100% by weight. More preferably, the amount is 20 to 100% by weight, still more preferably 30 to 100% by weight. When that amount is less than 10% by weight, the impact-resisting strength of the finally obtained moldings may not be improved to a satisfactory extent in some instances. Furthermore, the methacrylic acid alkyl ester monomer preferably comprises 60 to 100% by weight, more preferably 80 to 100% by weight of methyl methacrylate; the impact-resisting strength of the finally obtained moldings can be improved then.

The acrylic acid alkyl ester monomer is a component for adjusting the softening temperature of the shell layer of the graft polymer and thereby promoting the good dispersion of the graft polymer in the aliphatic polyester type biodegradable polymer in the moldings finally obtained and improving the impact-resisting strength of the moldings. The acrylic acid alkyl ester monomer includes as specific examples thereof, but is not limited to, acrylic acid alkyl esters having an alkyl group containing 2 to 12 carbon atoms, such as methyl acrylate, ethyl acrylate, butyl acrylate and 2-ethylhexyl acrylate.

The acrylic acid alkyl ester monomer can be used in an amount within the range of 0 to 60% by weighty with the total weight of the vinyl monomers being taken as 100% by weight. Preferably, the amount is 0 to 50% by weight, more preferably 0 to 40% by weight. When that amount exceeds 60% by weight, the amount of the above-mentioned methacrylic acid alkyl ester monomer becomes relatively decreased and the impact-resisting strength of the finally obtained moldings may not be improved to a satisfactory extent in some instances.

The aromatic vinyl monomer is a component effective in improving the transparency of the finally obtained moldings and used for adjusting the difference in refractive index between the graft polymer and aliphatic polyester type biodegradable polymer so that the difference may be minimized. The aromatic vinyl monomer includes as specific examples thereof, but is not limited to, those monomers enumerated hereinabove as specific examples of the above-mentioned aromatic vinyl monomer.

The aromatic vinyl monomer can be used in an amount within the range of 0 to 90% by weight, with the total weight of the vinyl monomers being taken as 100% by weight. Preferably, the amount is 0 to 50% by weight, more preferably 0 to 30% by weight. When that amount exceeds 90% by weight, the amount of the above-mentioned, methacrylic acid alkyl ester monomer becomes relatively decreased and the impact-resisting strength of the finally obtained moldings may not be improved to a satisfactory extent in some instances.

The cyanovinyl monomer is a component for finely adjusting the compatibility between the graft polymer and biodegradable aliphatic polyester resin. The cyanovinyl monomer includes as specific examples thereof, but is not limited to, acrylonitrile, methacrylonitrile and the like. At least one of these is used.

The cyanovinyl monomer can be used in an amount within the range of 0 to 40% by weight, with the total weight of the vinyl monomers being taken as 100% by weight. More preferably, the amount is 0% by weight. When that amount exceeds 40% by weight, the amount of the above-mentioned methacrylic acid alkyl ester monomer to be used becomes relatively decreased and the impact-resisting strength of the finally obtained moldings may not be improved to a satisfactory extent in some instances.

The other vinyl monomer copolymerizable with the above-mentioned vinyl monomers is a component for improving the processability of the resin composition of the invention in the step of molding. The vinyl monomer includes as specific examples thereof, but is not limited to, 4-hydroxybutyl acrylate, glycidyl methacrylate and the like.

The other vinyl monomer copolymerizable with the above-mentioned vinyl monomers is used in an amount of 0 to 20% by weight, preferably 0 to 10% by weight, more preferably 0% by weight. When that amount is larger than 20% by weight, the amount of the above-mentioned methacrylic acid alkyl ester monomer to be used becomes relatively decreased and the impact-resisting strength of the finally obtained moldings may not be improved to a satisfactory extent in some instances.

The core-shell type graft copolymer (b2) to be used in the practice of the invention is one obtained by graft copolymerization of the above-mentioned acrylic rubber and the above-mentioned vinyl monomer(s). The vinyl monomers give a polymer as a result of graft copolymerization.

The ratio between the core layer-forming acrylic rubber and the shell layer-forming vinyl polymer in the core-shell type graft copolymer (b2) to be used in the practice of the invention is preferably such that the acrylic rubber amounts to 5 to 95 parts by weight and the shell layer polymer to 95 to 5 parts by weight, more preferably such that the acrylic rubber amounts to 50 to 95 parts by weight and the shell layer polymer to 50 to 5 parts by weight. When the acrylic rubber amount is less than 5 parts by weight and the shell layer polymer amount is more than 95 parts by weight, the impact-resisting strength of the finally obtained moldings cannot be improved to a satisfactory extent in some instances; hence such quantity ratio is undesirable. When the acrylic rubber amounts to more than 95 parts by weight and the shell layer polymer to less than 5 parts by weight, the adhesion between the core-shell type graft copolymer (b2) and the aliphatic polyester type biodegradable polymer is lost in certain instances, leading to failure to satisfactorily improve the impact-resisting strength and transparency of the finally obtained moldings of the invention.

The method of obtaining the core-shell type graft copolymer (b2) is not particularly restricted but there may be employed, for example, the method comprising adding a monomer mixture comprising the methacrylic acid alkyl ester monomer, acrylic acid alkyl ester monomer, aromatic vinyl monomer, cyanovinyl monomer and vinyl monomer copolymerizable therewith in respective desired amounts to a rubber latex containing the acrylic rubber prepared in the above manner and having a glass transition temperature of not higher than 0°C, incorporating a polymerization initiator and the like, carrying out the polymerization by the conventional polymerization method, with incorporating a polymerization initiator and the like, and recovering a powdery core-shell type graft copolymer from the resulting graft polymer latex, and like method.

The addition and polymerization of the above-mentioned vinyl monomers may be carried out in one step or in a multistage manner, without any particular restriction. The addition of the vinyl monomers may be carried out all at once or continuously or in two or more stages in the manner of combination thereof, without any particular restriction.

The particles in the thus-obtained core-shell type graft polymer latex are taken out of the latex in the conventional manner by salting out and coagulation by addition of an electrolyte or acid or by spray drying in hot air. If necessary, washing, dehydration, drying and the like may be carried out each in the conventional manner.

### <Resin composition according to the first aspect of the invention>

The resin composition according to the first aspect of the invention is characterized in that it comprises 50 to 99% by weight of the above-mentioned component (A) and 50 to 1% by weight of the above-mentioned component (B), relative to the total weight (100% by weight) of the component (A) and component (B). When the content of the component (A), namely the aliphatic polyester type biodegradable polymer, is lower than 50% by weight, a deterioration in biodegradability may possibly result and, when the content of the component (B), namely at least one copolymer selected from the groups consisting of composite rubber graft copolymers (b1) and core-shell type graft copolymers (b2), is lower than 1% by weight, there is the possibility of the impact resistance being inferior. The resin composition of the invention preferably comprises 60 to 95% by weight of the component (A) and 40 to 5% by weight of the component (B), more preferably 70 to 95% by weight of the component (A) and 30 to 5% by weight of the component (B), relative to the total weight (100% by weight) of the component (A) and component (B).

Preferably, the resin composition of the invention further comprises 0.1 to 10 parts by weight a nucleating agent relative to the total weight (100 parts by weight) of the component (A) and component (B) since the moldability then becomes improved. At addition levels lower than 0.1 part by weight, the effect of the nucleating agent may possibly be insufficient and, at levels exceeding 10 parts by weight, the effect arrives at a level of saturation, hence such levels are economically unfavorable. The content of the nucleating agent is preferably 0.5 to 8 parts by weight, more preferably 0.5 to 5 parts by weight.

The nucleating agent includes fatty acid amides, urea derivatives, sorbitol compounds, boron nitride, fatty acid salts, aromatic fatty acid salts, and the like. These may be used singly or in combination. Among them, fatty acid amides, urea derivatives and sorbitol compounds are preferred in view of their high effects as nucleating agents.

As for the fatty acid amides, fatty acid amides containing 12 to 40 carbon atoms are preferred, and those containing 15 to 30 carbon atoms are more preferred. Specifically, there may be mentioned, for example, behenamide, oleamide, erucamide, stearamide, palmitamide, N-stearylbehenamide, N-stearylerucamide, ethylenebisstearamide, ethylenebisoleamide, ethylenebiserucamide, ethylenebislauramide, ethylenebiscapramide, p-phenylenebisstearamide, polycondensates of ethylenediamine with stearic acid and sebasic acid, and the like. Behenamide is particularly preferred among them.

Examples of the urea derivatives are bis (stearylureido) hexane, 4,4'-bis(3-methylureido)diphenylmethane, 4,4'-bis(3-cyclohexylureido)diphenylmenthane, 4,4'-bis(3-cyclohexylureido)dicyclohexylmethane, 4,4'-bis(3-phenylureido)dicyclohexylmethane, bis(3-methylcylohexylureido)hexane, 4,4'-bis(3-decylureido)diphenylmethane, N-octyl-N'-phenylurea, N,N'-diphenylurea, N-tolyl-N'-cyclohexylurea, N,N'-cyclohexylurea, N-phenyl-N'-tribromophenylurea, N-phenyl-N'-tolylurea, N-cyclohexyl-N'-phenylurea and the like. Bis(stearylureido)hexane is particularly preferred among them. Those urea bond-containing substituted urea compounds which are to be described later herein and serve as the components (c2) can also be preferably used.

As the sorbitol compounds, there may be mentioned 1,3,2,4-di(p-methylbenzylidene)sorbitol, 1,3,2,4-dibenzylidenesorbitol, 1,3-benzylidene-2,4-p-methylbenzylidenesorbitol, 1,3-benzylidene-2,4-p-ethylbenzylidenesorbitol, 1,3-p-methylbenzylidene-2,4-benzylidenesorbitol, 1,3-p-ethylbenzylidene-2,4-benzylidenesorbitol, 1,3-p-methylbenzylidene-2,4-p-ethylbenzylidenesorbitol, 1,3-p-ethylbenzylidene-2,4-p-methylbenzylidenesorbitol, 1,3,2,4-di(p-ethylbenzylidene)sorbitol, 1,3,2,4-di(p-n-propylbenzylidene)sorbitol, l,3,2,4-di(p-isopropylbenzylidene)sorbitol, 1,3,2,4-di(p-n-butylbenzylidene)sorbitol, 1,3,2,4-di(p-sec-butylbenzylidene) sorbitol, 1,3,2,4-di(p-tert-butylbenzylidene) sorbitol, 1,3,2,4-di(p-methoxybenzylidene) sorbitol, 1,3,2,4-di(p-ethoxybenzylidene)sorbitol, 1,3-benzyl-2,4-p-chlorobenzylidenesorbitol, 1,3-p-chlorobenzylidene-2,4-p-benzylidenesorbitol, 1,3-p-chlorobenzylidene-2,4-p-methylbenzylidenesorbitol, 1,3-p-chlorobenzyilidene-2,4-p-ethylbenzylidenesorbitol, 1,3-p-methylbenzylidene-2,4-p-chlorobenzylidenesorbitol, 1,3-p-ethylbenzylidene-2,4-p-chlorobenzylidenesorbitol, 1,3,2,4-di(p-chlorobenzylidene)sorbitol and the like. Among these, 1,3,2,4-di(p-methylbenzylidene)sorbitol and 1,3,2,4-dibenzylidenesorbitol are preferred. Those sorbitol compounds having a chemical structure represented by the general formula (1) given later herein, which serve as the components (c1) to be described later herein can also be preferably used.

Furthermore, the resin composition of the invention preferably contains 0.1 to 100 parts by weight of a filler relative to the total weight (100 parts by weight) of the component (A) and component (B), since good physical properties and moldability can be obtained then. At filler addition levels lower than 0.1 part by weight, the improvements in physical properties tend to be insignificant and, at levels exceeding 100 parts by weight, the impact strength tends to become low. The filler content is preferably 1 to 80 parts by weight, more preferably 5 to 70 parts by weight, particularly preferably 5 to 60 parts by weight.

As the filler, there may be mentioned such inorganic fillers as carbon black, calcium carbonate, silicon oxide and silicate salts, zinc white, Hycite clay, kaolin, basic magnesium carbonate, mica, talc, ground quartz, diatomaceous earth, ground dolomite, titanium oxide, zinc oxide, antimony oxide, barium sulfate, calcium sulfate, alumina and calcium silicate. Among them, mica and talc with a particle diameter of 0.1 to 30 µm are particularly preferred.

The filler also includes inorganic fibers such as glass fibers and carbon fibers, organic fibers such as human hairs and wool, and the like. Also usable are natural fibers such as bamboo fibers, pulp fibers, kenaf fibers, other similar plant-derived substitute species, fibers derived from annual plants of the family Malvaceae, genus Hibiscus, and fibers derived from annual plants of the family Tiliaceae.

In the resin composition, there may be incorporated, according to need, one or more of such secondary additives as colorants such as pigments and dyes, odor absorbers such as active carbon and zeolite, perfumes such as vanillin and dextrin, stabilizers such as antioxidants and ultraviolet absorbers, lubricants, mold release agents, water repellents and antimicrobial agents.

The above-mentioned additives may be used singly or in combination.

In the resin composition of the invention, a plasticizer may also be used at levels within the range within which the effects of the invention are not lessened. The use of a plasticizer makes it possible to reduce the melt viscosity on the occasion of processing under heating, in particular extrusion processing, and prevent the molecular weight reduction due to shearing and heat generation and the like and, in some instances, the use of a plasticizer can be expected to increase the rate of crystallization and, further, can provide films and sheets obtained as moldings with extensibility. The plasticizer is not particularly restricted but the following may be mentioned as examples. Ether type plasticizers, ester type plasticizers, phthalate plasticizers, phosphorus-containing plasticizers and the like are preferred for example as the plasticizer for the aliphatic polyester type biodegradable polymer, and ether type plasticizers and ester type plasticizers, which are superior in compatibility with polyesters, are more preferred. As the ether type plasticizers, there may be mentioned, for example, polyethylene glycol, polypropylene glycol, polytetramethylene glycol and other polyoxyalkylene glycols, and the like. As the ester type plasticizers, there may be mentioned esters from an aliphatic dicarboxylic acid and an aliphatic alcohol, and the like. The aliphatic dicarboxylic acid includes, for example, oxalic acid, succinic acid, sebacic acid, adipic acid and the like, and the aliphatic alcohol includes, for example monohydric alcohols such as methanol, ethanol, n-propanol, isopropanol, n-hexahol, n-octanol, 2-ethylhexanol, n-dodecanol and stearyl alcohol, dihydric alcohols such as ethylene glycol, 1,2-propylene glycol, 1,3-propylene glycol, 1,4-butanediol, 1,5-pentanediol, 1,6-hexanediol, diethylene glycol, neopentyl glycol and polyethylene glycol and, further, polyhydric alcohols such as glycerol, trimethylolpropane and pentaerythritol. There may further be mentioned copolymers, di-copolymers, tri-copolymers, tetra-copolymers and the like as derived from a combination of two or more of the above-mentioned polyethers and polyesters as well as blends of two or more species selected from among such homopolymers and copolymers and the like. Also conceivable are esterified hydroxycarboxylic acids and the like The plasticizers mentioned above may be used singly or in combination.

The respective components employed in the practice of the invention may be compounded to give the desired final composition also by preparing the so-called masterbatch in advance from a partial combination of the components of the composition and then adding thereto the remaining parts of the components, together with the further remaining component(s), if any. By doing so, it is possible to improve the compatibility among the respective components and improve the physical property balance.

The resin composition and moldings of the invention preferably have an average crystal particle diameter of not greater than 50 µm from the viewpoint of improving or increasing the impact resistance, tensile properties and transparency, and the like.

The resin composition of the invention can be prepared by any method known in the art. As for the method of mixing by heating/melting, there may be mentioned the mixing by mechanical stirring in a single-screw extruder, twin-screw extruder, kneader, gear pump, kneading roll, or stirrer-equipped tank, and the application of a stationary mixer in which current splitting and confluence are alternately repeated by means of a current guide system. In the case of heating/melting, the mixing should be carried out with care so as not to cause molecular weight reductions due to thermal decomposition. Also available is the method which comprises dissolving the necessary components in a solvent capable of dissolving them and then removing the solvent to obtain the resin composition of the invention.

The resin composition of the invention can be injection-molded and may also be made into pellets, blocks, films or sheets using such an extrusion molding machine as mentioned above. The resin composition may be once pelletized and the pellets are then made into films or sheets on an injection or extrusion molding machine so that the dispersion of the respective components/ingredients may become better. The composition can be made into films and sheets also by using a calender, roll or inflation molding machine. The films or sheets obtained from the resin composition of the invention can further be subjected to thermoforming by heating, vacuum forming or press processing. Blow molding using a blow molding machine is also possible.

The invention in the first aspect thereof is also concerned with the injection moldings, extrusion moldings, blow moldings, expanded moldings, film-like and sheet-like moldings, vacuum moldings and press moldings shaped using the resin composition obtained in the above manner.

In the resin composition according to the first aspect of the invention, there may be incorporated any of the thermoplastic resins and thermosetting resins known in the art provided that the effects of the invention will not be lessened. As typical thermoplastic resins, there may be mentioned general-purpose thermoplastic resins such as poly(vinyl chloride) resins, polystyrene resins and ABS resins, and general-purpose engineering plastics such as polyethylene terephthalate resins, polybutylene terephthalate resins, polycarbonate resins and polyamide resins. As typical thermosetting resins, there may be mentioned epoxy resins and the like. Furthermore, any of the resin modifiers known in the art can be used.

The resin composition according to the first aspect of the invention is made into such moldings as paper, films, sheets, tubes, plates, rods/bars, containers, bags and parts, and such moldings are used singly as such or used to produce composites together with various fibers, yarns, ropes, woven fabrics, knit fabrics, nonwoven fabrics, papers films, sheets, tubes, boards, rods/bars, containers, bags, parts and foams made of a separate material other than that composition to thereby attain improvements in physical properties as compared with the single use thereof. The thus-obtained moldings can be suitably used in the fields of agriculture, fishery, forestry, horticulture, medicine, sanitary items, food industry, clothing, non-clothing, packaging, automobiles, building materials and the like.

### <Second aspect of the invention>

The resin composition according to the second aspect of the invention is now described.

The resin composition according to the second aspect of the invention is concerned with a resin composition comprising the above-mentioned aliphatic polyester type biodegradable polymer (A) and at least one compound (C) selected from the group consisting of sorbitol compounds (c1) having a specific chemical structure and urea bond-containing substituted urea compounds (c2).

The aliphatic polyester type biodegradable polymer to be used as the component (A) in the second aspect of the invention can be any of the same ones as described hereinabove. In the second aspect of the invention as well, the component (A) is preferably a polyhydroxyalkanoate type one, more preferably a poly(3-hydroxyalkanoate) type aliphatic polyester (hereinafter sometimes referred to as "P3HA") of microbial origin. More specifically, the aliphatic polyester type biodegradable polymer is preferably a biodegradable (3-hydroxyalkanoate) copolymer composed of the repeating units represented by the formula: [-CHR-CH₂-CO-O-] (wherein R represents an alkyl group represented by CₙH₂ₙ₊₁ and n is an integer of 1 to 15).

Among such biodegradable (3-hydroxyalkanoate) copolymers, poly[(3-hydroxybutyrate)-co-(3-hydroxyhexanoate)] copolymers composed of the (3-hydroxybutyrate) repeating units and (3-hydroxyhexanoate) repeating units are preferred, and those produced by microorganisms are more preferred, like in the case mentioned hereinabove.

The physical properties, for example the melting point, thermal stability and flexibility, of the poly[(3-hydroxybutyrate)-co-(3-hydroxyhexanoate)] [PHBH⁻] to be used in the second aspect of the invention can be modified by controlling the composition ratio between the constituent repeating units.

In the following, the sorbitol compounds (c1) and urea bond-containing substituted urea compounds (c2) each serving as the component (C) are described.

The admixture of such a specific sorbitol compound (c1) with the main component, namely the plant-derived aliphatic polyester type biodegradable polymer according to the invention makes it possible to obtain compositions and moldings improved in mold release properties, shortened in molding time, improved in processability and improved in thermal stability.

The sorbitol compounds (c1) to be used in the practice of the invention are compounds having a chemical structure represented by the following general formula (1): 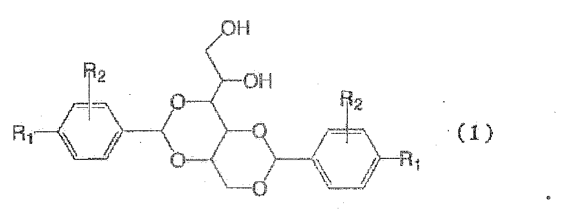 In the general formula (1), R₁ and R₂ may be the same or different and each independently represents a hydrogen atom, a halogen atom(s) selected, from the group consisting of F, Cl and Br, or an alkyl Or alkoxy group containing 1 to 6 carbon atoms which alkyl or alkoxy group may optionally be substituted at least partly by a hydroxyl group(s) and/or a halogen atom(s) selected from the group consisting of F, Cl and Br. By properly selecting the substituent hydroxyl group and/or halogen atom, it is possible to control the effect of such compound as a nucleating agent and thereby also control the properties (thermal stability, strength properties, etc.) of the resin composition of the invention which comprises (co)poly(lactic acid) or a like aliphatic polyester type biodegradable polymer.

The alkyl group containing 1 to 6 carbon atoms is methyl, ethyl, n-propyl, isopropyl, n-butyl, or the like group. The alkoxy group containing 1 to 6 carbon atoms is methoxy, ethoxy, n-propoxy, isopropoxy, n-butoxy, or the like group. Among them, those containing 1 to 2 carbon atoms, namely methyl, ethyl, methoxy and ethoxy groups, are preferred.

As specific examples of the sorbitol compounds (c1), there may be mentioned bisbenzylidenesorbitol, bis(p-methylbenzylidene)sorbitol, bis(p-ethylbenzylidene)sorbitol, bis(p-chlorobenzylidene)sorbitol and bis(p-broznobenzylidene) sorbitol. Among these, at least one sorbitol compound selected from the group consisting of bisbenzylidenesorbitol, bis (p-methyl benzylidene) sorbitol, bis(p-ethylbenzylidene)sorbitol and bis(p-chlorobenzylidene)sorbitol is preferably used. In particular, bis(p-methylbenzylidene)sorbitol and bis(p-ethylbenzylidene) sorbitol are preferably used. These may be used singly or as a mixture of two or more of them.

By admixing a specific substituted urea compound with the main component, namely the plant-derived aliphatic polyester type biodegradable polymer in accordance with the second aspect of the invention, it becomes possible to obtain compositions and moldings improved, in mold release properties, shortened in molding time, improved in processability and improved in thermal stability.

The urea bond-containing substituted urea compounds to be used as the component (c2) according to the invention are, for example, aliphatic or aromatic bisurea compounds represented by the general formula (2) :

R₃R₄N-CO-NR₅-R₉-R₆N-CO-NR₇R₈ (2)

(wherein R₃, R₄, R₅, R₆, R₇ and R₈ each independently represents a hydrogen atom or substituted or unsubstituted alkyl, aryl or aralkyl group containing 1 to 20 (preferably 1 to 15) carbon atoms, and R₉ represents a substituted or unsubstituted alkylene, arylene or aralkylene group containing 1 to 20 (preferably 1 to 15) carbon atoms), aliphatic or aromatic monourea compounds represented by the general formula (3)a

R₁₀R₁₁N-CO-NR₁₂R₁₃ (3)

(wherein R₁₀, R₁₁, R₁₂ and R₁₃ each independently represents a hydrogen atom or substituted or unsubstituted alkyl, aryl or aralkyl group containing 1 to 20 (preferably 1 to 15) carbon atoms), or the like. As specific examples of such aliphatic or aromatic bisurea compounds represented by the general formula (2), there may be mentioned, for example, xylylenebisstearylurea, toluylenebisstearylurea, hexamethylenebisstearylurea, diphenylmethanebisstearylurea and diphenylmethanebislaurylurea. As specific examples of such aliphatic or aromatic monourea compounds represented by the general formula (3), there may be mentioned, for example, N-butyl-N'-stearylurea, N-propyl-N'-stearylurea, N-stearyl-N'-stearylurea, N-phenyl-N'-stearylurea, N N,N ,N'-tetrastearylurea and the like. From the crystallization promotion viewpoint, in particular, xylylenebisstearylurea, hexamethylenebisstearylurea, diphenylmethanebisstearylurea and toluylenebisstearylurea are preferably used. These may be used singly or as a mixture of two or more of them.

The lower limit to the level of addition of the component (C) used in accordance with the invention is preferably set at 0.1 part by weight, more preferably 0 = 2 part by weight, still more preferably 0.3 part by weight, particularly preferably 0. 5 part by weight, per 100 parts by weight of the component (A), namely the aliphatic polyester type biodegradable polymer. When the level of addition of the component (C) is below the lower limit of 0.1 part by weight, insufficient processability and/or thermal stability may result. The upper limit to the level of addition of the component (C) is preferably set at 5 part by weight, more preferably 4.5 parts by weight, still more preferably 4 parts by weight, particularly preferably 3 parts by weight, per 100 parts by weight of the component (A). When the level of addition of the component (C) exceeds the upper addition level limit of 5 parts by weight, the appearance and/or physical properties may be impaired.

The resin composition according to the second aspect of the invention can be prepared by any method known in the art. As for the method of mixing by heating/melting, there may be mentioned the mixing by mechanical stirring in a single-screw extruder, twin-screw extruder, kneader, gear pump, kneading roll, or stirrer-equipped tank, and the application of a stationary mixer in which current splitting and confluence are alternately repeated by means of a current guide system. In the case of heating/melting, the mixing should be carried out with care so as not to cause molecular weight reductions due to thermal decomposition. Also available is the method which comprises dissolving the necessary components in a solvent capable of dissolving them and then removing the solvent to obtain the resin composition of the invention.

The resin composition according to the second aspect of the invention can be injection-molded and may also be made into pellets, blocks, films or sheets using such an extrusion molding machine as mentioned above. The resin composition may be once pelletized and the pellets are then made into films or sheets on an injection or extrusion molding machine so that the dispersion of the components/ may become better. The composition can be made into films and sheets also by using a calender, roll or inflation molding machine. The films or sheets obtained from the resin composition of the invention can further be subjected to thermoforming by heating, vacuum forming, or press processing. Blow molding using a blow molding machine is also possible.

In the resin composition according to the second aspect of the invention, there may be incorporated any of the thermoplastic resins and thermosetting resins known in the art provided that the effects of the invention will not be lessened. As typical thermoplastic resins, there may be mentioned general-purpose thermoplastic resins such as poly(vinyl chloride) resins, polystyrene resins and ABS resins, and general-purpose engineering plastics such as polyethylene terephthalate resins, polybutylene terephthalate resins, polycarbonate resins and polyamide resins. As typical thermosetting resins, there may be mentioned epoxy resins and the like. Furthermore, any of the resin modifiers known in the art can be used.

One or more of various known additives which are effective as fillers, thickening agents and/or nucleating agents can be added to the above resin composition. The additives include carbon black, calcium carbonate, silicon oxide and silicate salts, zinc white, Hycite clay, kaolin, basic magnesium carbonate, mica, talc, ground quartz, diatomaceous earth, ground dolomite, titanium oxide, zinc oxide, antimony oxide, barium sulfate, calcium sulfate, alumina, calcium silicate, boron nitride, behenamide and other aliphatic amide compounds, aliphatic urea compounds, crosslinked high-molecular-weight polystyrene species, rosin-based metal salts, glass fibers, whiskers, and the like. These may be added as such or after treatment necessary for nanocomposite preparation. The addition of an inorganic, filler(s) is preferred to minimize costs and/or attain a favorable physical property balance.

The inorganic filler is preferably incorporated in an amount of 0.1 to 100 by weight per 100 parts by weight of the aliphatic polyester type biodegradable polymer. At filler addition levels below 0.1 part by weight, there is a tendency for the physical properties to be improved only slightly and, at levels exceeding 100 parts by weight, the impact resistance tends to decrease. The addition level is preferably 1 to 80 parts by weight, more preferably 5 to 70 parts by weight, particularly preferably 5 to 60 parts by weight.

Also usable as additives are inorganic fibers such as carbon fibers, organic fibers such as human hairs and wool, and the like, and, further, natural fibers such as bamboo fibers, pulp fibers, kenaf fibers, other similar plant-derived substitute species, fibers derived from annual plants of the family Malvaceae, genus Hibiscus, and fibers derived from annual plants of the family Tiliaceae. From the carbon dioxide level reduction viewpoint, the addition of plant-derived natural fibers, in particular kenaf fibers, is preferred.

The natural fibers are used preferably in an amount of 0.1 to 100 parts by weight per 100 parts by weight of the aliphatic polyester type biodegradable polymer. When the amount of the natural fibers is smaller than 0.1 part by weight, there is a tendency for the physical properties to be improved only to a slight extent and, when it exceeds 100 parts by weight, the impact resistance tends to lower. More preferably, the addition level is 1 to 80 parts by weight, still more preferably 5 to 70 parts by weight, particularly preferably 5 to 60 parts by weight.

In the resin composition, there may be incorporated, according to need, one or more of such secondary additives as colorants such as pigments and dyes, odor absorbers such as active carbon and zeolite, perfumes such as vanillin and dextrin, stabilizers such as antioxidants and ultraviolet absorbers, lubricants, mold release agents, water repellents and antimicrobial agents.

The above-mentioned additives may be used singly or in combination.

In the resin composition of the invention, a plasticizer may also be used at levels within the range within which the effects of the invention are not lessened. The use of a plasticizer makes it possible to reduce the melt viscosity on the occasion of processing under heating, in particular extrusion processing, and prevent the molecular weight reduction due to shearing and heat generation and the like and, in some instances, the use of a plasticizer can be expected to increase the rate of crystallization and, further, can provide films and sheets obtained as moldings with extensibility. The plasticizer is not particularly restricted but the following may be mentioned as examples. Ether type plasticizers, ester type plasticizers, phthalate plasticizers, phosphorus-containing plasticizers and the like are preferred for example as the plasticizer for the aliphatic polyester type biodegradable polymer, and ether type plasticizers and ester type plasticizers, which are superior in compatibility with polyesters, are more preferred. As the ether type plasticizers, there may be mentioned, for example, polyethylene glycol, polypropylene glycol, polytetramethylene glycol and other polyoxyalkylene glycols, and the like. As the ester type plasticizers, there may be mentioned esters from an aliphatic dicarboxylic acid and an aliphatic alcohol, and the like. The aliphatic dicarboxylic acid includes, for example, oxalic acid, succinic acid, sebacic acid, adipic acid and the like, and the aliphatic alcohol includes, for example monohydric alcohols such as methanol, ethanol, n-propanol, isopropanol, n-hexanol, n-octanol, 2-ethylhexanol, n-dodecanol and stearyl alcohol, dihydric alcohols such as ethylene glycol, 1,2-propylene glycol, 1,3-propylene glycol, 1,3-butanediol, 1,5-pentanediol, 1,6-hexanediol, diethylene glycol, neopentyl glycol and polyethylene glycol and, further, polyhydric alcohols such as glycerol, trimethylolpropane and pentaerythritol. There may further be mentioned copolymers, di-copolymers, tri-copolymers, tetra-copolymers and the like as derived from a combination of two or more of the above-mentioned polyethers and polyesters as well as blends of two or more species selected from among such homopolymers and copolymers and the like. Also conceivable are esterified hydroxycarboxylic acids and the like. At least one of the plasticizers mentioned above may be used.

The respective components employed in the practice of the invention may be compounded to give the desired final composition also by preparing the so-called masterbatch in advance from a partial combination of the components of the composition and then adding thereto the remaining parts of the components, together with the further remaining component(s), if any. By doing so, it is possible to improve the compatibility among the respective components and improve the physical property balance.

The present invention, in its first aspect, can provide resin compositions and moldings which can contribute to the prevention of global warming from the carbon neutral viewpoint and are excellent in impact resistance, tensile properties and transparency by compounding at least one copolymer selected from the group consisting of specific composite rubber graft copolymers and specific core-shell type graft copolymers with the aliphatic polyester type biodegradable polymer. It can also provide resin compositions and moldings excellent in impact resistance, tensile properties, elasticity modulus in bending, thermal stability and the like when they further contain a filler and the like.

The present invention, in its second aspect, can provide compositions and moldings effective in global warming prevention and as carbon neutral materials and excellent in processability and thermal stability by admixing a specific sorbitol compound or specific substituted urea compound with a plant-derived biodegradable polymer obtained by positive fixation of carbon dioxide on the earth.

### BEST MODES FOR CARRYING OUT THE INVENTION

The following examples illustrate the compositions and moldings of the present invention in further detail. These examples are, however, by no means limitative of the scope of the invention.

### (First aspect of the invention)

The following resins and additives were used in the examples relating to the first aspect of the invention. PHBH : Poly[(3-hydroxybutyrate)-co-(3-hydroxyhexanoate)] copolymers (the refractive index of each copolymer being given in the relevant tables)
HH fraction: Mole fraction (mol %) of 3-hydroxyhexanoate in PHBH
M-400: Core-shell type graft copolymer comprising an acrylic rubber as the core layer and a vinyl monomer-derived polymer as the shell layer (product of Kaneka Corporation; refractive index = 1.468)
Nucleating agent : Behenamide (product of Croda; product name: Incroslip B)
Talc: Average particle diameter = about 7 µm (product of Nippon Talc Co., Ltd.; product name: K-1)
Mica: Average particle diameter = about 20 µm (product of Yamaguchi Mica Co., Ltd.; product name: A-41S)
Antioxidant: Hindered phenol type antioxidant (product of Ciba Specialty Chemicals; product name: Irganox 1010)

### <Maximum tensile strength, breaking strength and elongation at break measurements>

Maximum tensile strength, breaking strength and elongation at break measurements were made according to JIS K 7113 using an autograph (product of Shimadzu Corporation).

### <Notched Izod impact strength (impact resistance) measurements>

Notched Izod impact strength measurements were made according to JIS K 7110 using an Izod impact strength tester (product of Toyo Seiki Seisaku-sho, Ltd.).

### <Thermal deformation temperature (HDT) measurements>

Thermal deformation temperature measurements were made according to JIS K 7207 (Method A) under loads of 1.8 MPa and 0.45 MPa.

### <Transparency (visual) evaluation>

The injection moldings used for the above-mentioned tensile properties and Izod impact strength (impact resistance) measurements were evaluated by visual inspection. Excellent: Giving a feeling of transparency; Poor: No feeling of transparency.

### <Haze and total luminous transmittance measurements>

Each resin composition mixed up was extruded into pellets, which were press-molded into a 0.5-mm-thick flat sheet. The sheet was subjected to turbidity (haze) and total luminous transmittance measurements according to ASTM D 1003.

### <Crystalline particle diameter>

Using a polarization microscope capable of raising and lowering test specimen temperature, the sample was heated from room temperature to 200°C at a rate of 20°C/minute, maintained at that temperature for 5 minutes, then cooled to 60 °C at a rate of 20°C/minute and maintained at 60°C for 10 minutes to allow isothermal crystallization, and the average crystalline particle diameter was then measured.

### (1) Synthesis of poly[(3-hydroxybutyrate)-co-(3-hydroxyhexanoate)] copolymers (PHBHs)

The PHBHs used were PHBH species produced using, as the microorganism, Alcaligenes eutrophus AC 32 (J. Bacteriol. , 179, 4821 (1997)) produced by introducing the Aeromonas caviae-derived PHA (polyhydroxyalkanoate) synthase gene into Alcaligenes eutrophus under adequately adjusted material and cultivation conditions. They had HH fractions of 7 mol % and 12 mol %, respectively and an Mw (weight average molecular weight) of about 1,000,000. As for the other materials used, the materials specified in Table 2 were used for compounding in the amounts shown therein in terms of part(s).

### (2) Synthesis of composite rubber graft copolymers (b1) (2-1) Rubber synthesis

### (Production Example 1) [Production of a polyorganosiloxane latex (S-1)]

A siloxane mixture (100 parts) was prepared by mixing up 1 part of tetraethoxysilane, 1.5 parts of γ-methacryloyloxypropyldimethoxymethylsilane and 97.5 parts of octamethylcyclotetrasiloxane. The mixed siloxane (100 parts) was added to a solution of 1 part of sodium dodecylbenzenesulfonate and 1 part of dodecylbenzenesulfonic acid in 200 parts of distilled water. After preliminary stirring in a homomixer at 10,000 rpm, emulsification and dispersion were effected in the homogenizer at a pressure of 300 kg/cm² to give an organosiloxane latex. This liquid mixture was transferred to a separable flask equipped with a condenser and a stirring blade, heated at 90°C for 5 hours with stirring/mixing and then allowed to stand at 20°C. After 48 hours of standing, the latex was neutralized to pH 7.5 with an aqueous solution of sodium hydroxide The polymerization was thus completed, and a polyorganosiloxane rubber latex (S-1) was obtained. The polyorganosiloxane rubber obtained showed a polymerization rate of 89%, and the average particle diameter of the polyorganosiloxane rubber was 0.15 µm.

### (Production Example 2) [Production of a poly (alkyl acrylate) latex (R-1)]

A five-necked flask equipped with a stirrer, reflux condenser, nitrogen inlet, additional monomer feeding port and thermometer was charged with 200 parts of pure water, 1.5 parts of sodium rosinate, 0.4 part of Rongalite (SFS), 0.01 part of ethylenediaminetetraacetic acid disodium salt (EDTA) and 0.0025 part of ferrous sulfate all at once. The system temperature was raised to 40°C with stirring in a nitrogen atmosphere and, after arrival at 40°C, a mixture composed of 100 parts of butyl acrylate (BA), 1 part of allyl methacrylate (AlMA) and 0.1 part of cumene hydroperoxide (CHP) was added dropwise continuously over 6 hours. After completion of the dropping, the whole mixture was stirred at 40°C for 1 hour to complete the polymerization. The polymerization conversion rate was 97%. The latex obtained had a pH of 8.2, a solid concentration of 32%, an average particle diameter of 80 nm, and a gel content of 99%.

### (Production Example 3) [Production of composite rubbers] (SR-1)

An amount, corresponding to 10 parts of solid matter, of the above-mentioned polyorganosiloxane rubber latex S-1 was taken and placed in a separable flask equipped with a stirrer, 180 parts of distilled water was added and, after nitrogen substitution, the temperature was raised to 40°Cs The flask was then charged with a liquid mixture consisting of 65 parts of n-butyl acrylate, 0.65 part of allyl methacrylate and 0.065 part of CHP, the whole mixture was stirred for 30 minutes to thereby allow the liquid mixture to permeate through the polyorganosiloxane rubber particles. Then, the flask was charged with a liquid mixture composed of 0.0025 part of ferrous sulfate, 0.01 part of EDTA, 0.3 part of SFS and 5 parts of distilled water to initiate the radical polymerization. The inside temperature was maintained at 70°C for 2 hours to drive the polymerization to completion, and a composite rubber latex was obtained. A part of this latex was taken, and the average particle diameter of the composite rubber was measured and found to be 0.22 µm.

### (SR-2)

### * [Production of an acid group-containing copolymer latex (ALX)]

A five-necked flask equipped with a stirrer, reflux condenser, nitrogen inlet, additional monomer feeding port and thermometer was charged with 200 parts of pure water, 0.6 part of dioctyl sulfosuccinate sodium salt, 0.4 part of SFS, 0.01 part of EDTA and 0.0025 part of ferrous sulfate all at once. The temperature of the system was raised to 65°C with stirring in a nitrogen atmosphere. After arrival at 65°C, a first-stage monomer mixture composed of 5 parts of butyl methacrylate (BMA), 20 parts of BA, 0.1 part of tert-dodecylmercaptan (t-DM) and 0.05 part of CHP was continuously added dropwise. After completion of the dropping, a second-stage monomer mixture composed of 60 parts of butyl methacrylate (BMA), 15 parts of methacrylic acid (MAA), 0.2 part of t-DM and 0.15 part of CHP was continuously added dropwise. The first-stage and second-stage monomer mixtures were each added dropwise continuously and uniformly over 5 hours. At 2 hours after the start of dropping, 0.6 part of dioctyl sulfosuccinate sodium salt was added. After completion of the dropping, stirring was continued at 65°C for 1 hour to drive the polymerization to completions. An acid group-containing copolymer latex (ALX) was obtained. The polymerization conversion rate was 98%. The latex obtained had a solid concentration of 33%, a gel content of 0%, and an average particle diameter of 100 nm.

### *Rubber particle growth

An amount, corresponding to 20 parts of solid matter, of the above-mentioned polyorganosiloxane rubber latex S-1 was taken and placed in a separable flask equipped with a stirrer, the poly(alkyl acrylate) latex (R-1) was further added in an amount of 55 parts as solid matter and, after 15 minutes of stirring, the temperature was raised to 60°C. After arrival at 60°C, the system was adjusted to pH 10 by addition of sodium hydroxide and then 2.6 parts (as solid matter) of the acid group-containing copolymer latex (ALX) was added. Stirring was continued for 45 minutes to give a co-grown aggregate rubber (SR-2). The particle diameter of the co-grown aggregate rubber was 400 nm.

### (2) (Production Example 4) [Production of graft copolymers]

The composite rubber SR-1 or SR-2 was used. It was diluted to 200 parts by addition of water and, while maintaining the temperature at 60°C, 0.2 part of SFS was added with stirring in a nitrogen atmosphere, 25 parts of a liquid vinyl monomer mixture specified in Table 1 was added dropwise over 2.5 hours and the resulting mixture was then maintained at 60°C for 1.5 hours to complete the graft polymerization onto the composite rubber. Calcium chloride (1.5 parts) was added to the composite rubber-based graft copolymer latex obtained to thereby cause coagulation, followed by separation, washing and drying. In this manner, powdery composite rubber-based or organosiloxane-based graft copolymers were obtained.

**Table 1 (Graft copolymers)**

| Graft copolymer | Rubber species | | Vinyl monomers | | | |
|---|---|---|---|---|---|---|
| | | (weight parts) | MMA (weight parts) | BA (weight parts) | ST (weight parts) | AN (weight parts) |
| G-1 | SR- 1 | 75 | 20 | 5 | | |
| G-2 | SR- 1 | 75 | 15 | | 10 | |
| G-3 | SR - 1 | 75 | 10 | | 10 | 5 |
| G-4 | SR- 2 | 75 | 20 | 5 | | |
| G-5 | S- 1 | 75 | 20 | 5 | | |

| | | | | | | |
|---|---|---|---|---|---|---|
| MMA - Methylmethacrylate BA - Butylacrylate ST - Styrene AN - Acrylonitrile (3) Resin compositions | | | | | | |

### (Examples 1 to 6)

Either of the [(3-hydroxybutyrate)-(3-hydroxyhexanoate)] copolymers and one of the graft copolymers specified in Table 1 were mixed up, together with a nucleating agent and a filler, in a twin-screw extruder (Japan Steel Works, Ltd. TEX 33, ⌀ 33 mm, pelletizing temperature 170°C) to give pellets of each composition. Using the pellets of each composition, 1/4-inch bars were produced by injection molding (Toshiba Corporation 75 t injection molding machine, injection temperature 190°C) and measured for Izod impact strength and HDT. The results thus obtained are shown in Table 2.

### (Comparative Examples 1 and 2)

The formulation specified in. Table 2 was evaluated in the same manner as in Example 1 The physical properties of a system containing no graft copolymer were also examined.

**Table 2 (Physical properties of compounded resins)**

| | Graft copolymer | | PHBH HH7% | PHBH HH 12% | Talc(7µ) | Mica(20µ) | ZOD | HDT 0.45Mpa |
|---|---|---|---|---|---|---|---|---|
| | Species | Weight parts | Weight parts | Weigth parts | Weight parts | Weight parts | J/ m | °C |
| Example 1 | G- 1 | 17 | 93 | | 22 | | 145 | 100 |
| Example 2 | G - 1 | 17 | | 93 | 22 | | 155 | 97 |
| Example 3 | G - 1 | 17 | 93 | | | 22 | 120 | 107 |
| Example 4 | G - 2 | 17 | 93 | | 22 | | 115 | 99 |
| Example 5 | G - 3 | 17 | 93 | | 22 | | 118 | 99 |
| Example 6 | G - 4 | 17 | 93 | | 22 | | 97 | 98 |
| Comp. Exam. 1 | G - 5 | 17 | 93 | | 22 | | 22 | 97 |
| Comp. Exam 2 | - - - | 0 | 100 | | 22 | | 15 | 113 |

| | | | | | | | | |
|---|---|---|---|---|---|---|---|---|
| Note) Two parts by weight of behenam ide as a nucleating agent and 0.2 part by wei of an antioxidant (hindered phenoltype antioxidant product of C ba Specialty Chem product nam e R-1010)) were added to each com position. | | | | | | | | |

The results shown in Table 2 indicate that the moldings of Examples 1 to 6 produced from the resin compositions according to the invention using a composite rubber are much higher in Izod impact strength and HDT and superior in impact resistance and thermal stability as compared with the polyorganosiloxane rubber-derived molding of Comparative Example 1. The molding of Comparative Example 2 produced without using the graft copolymer is high in HDT value but low in Izod impact strength, namely inferior in impact resistance. In Examples 1 to 6 where the moldings were produced from the resin compositions of the invention, on the contrary, the HDT values are maintained and the values of Izod impact strength are great, hence excellent in impact resistance. Thus, it is evident that the resin compositions and moldings of the invention are excellent in impact resistance while maintaining high levels of thermal stability.

### (Examples 7 to 11 and Comparative Examples 3 to 5)

The PHBHs used were PHBH species produced using, as the microorganism, Alcaligenes eutrophus AC 32 (J. Bacteriol., 179, 4821 (1997)) produced by introducing the Aeromonas caviae-derived PHA synthase gene into Alcaligenes eutrophus under adequately adjusted material and cultivation conditions. They had HH fractions of about 7 mol %, 10 mol % and 12 mol %, respectively and an Mw (weight average molecular weight) of about 700,000. As for the other materials used, the materials specified in Table 3 were used for compounding in the amounts shown therein in terms of part(s).

The materials were mixed up and extruded using a twin-screw extruder (Japan Steel Works, Ltd. TEX 33, ⌀ 33 mm, pelletizing temperature 170°C) to give pellets of each composition. Using the pellets of each composition, dumbbells and 1/4-inch bars were produced by injection molding (Toshiba Corporation 75 t injection molding machine, injection temperature 190°C) and measured for Izod impact strength, tensile properties, elasticity modulus in bending, maximum bending strength and HDT. The results thus obtained are shown in Table 3. Table 3

| | Example 7 | Example 8 | Example 9 | Example 10 | Example 11 | Comp. Exam.3 | comp. Exam.4 | Comp. Exam.5 |
|---|---|---|---|---|---|---|---|---|
| PHBH(HH7%) | 100 | | | 100 | 100 | 100 | | |
| PHBH(HH10%) | | 100 | | | | | 100 | |
| PHBH(HH12.%) | | | 100 | | | | | 100 |
| M-400 | 20 | 20 | 20 | 20 | 20 | | | |
| Tarc(7µ) | | | | 22 | | | | |
| Mica(20µ) | | | | | 22 | | | |
| IncroslipB | 2 | 2 | 2 | 2 | 2 | 2 | 2 | 2 |
| Antioxidant | 0.2 | 0.2 | 0.2 | 0.2 | 0.2 | 0.2 | 0.2 | 0.2 |
| Difference in refractive index 1) | 0.017 | 0.015 | 0.013 | | | | | |
| IZOD(J/m) | 72 | 63 | 99 | 115 | 113 | 23 | 24 | 22 |
| Maximum tensile strength (MPa) | 17 | 14 | 12 | 16 | 16 | 24 | 19 | 17 |
| Breaking strength (MPa) | 14 | 11 | 10 | 10 | 8 | 24 | 12 | 14 |
| Elongation at break(%) | >155 | >155 | >155 | 77 | 40 | 6 | 13 | 9 |
| Bending strength (MPa) | 22 | 18 | 14 | 25 | 25 | 36 | 26 | 23 |
| Elasticity modulus in bending (MPa) | 790 | 581 | 425 | 1377 | 1900 | 1420 | 937 | 827 |
| HDT (1.8MPa) | 65 | - | 63 | 69 | 73 | 70 | - | 65 |
| HDT (0.45MPa) | 101 | 91 | 87 | 99 | 99 | 113 | 99 | 93 |
| Transparency (injection molding, visual evaluation) | Excellent | Excellent | Excellent | Poor | Poor | Excellent | Excellent | Excellent |
| Transparency (0-5 mm pressed sheet) in terms of haze (%) | - | 60 | - | - | - | - | 70 | - |
| Transparency (0.5 mm pressed sheet) in terms of total luminous transmittance (%) | - | 75 | - | - | - | - | 75 | - |
| Crystal particle diameter | - | <40 | - | - | - | - | 60 | - |

| | | | | | | | | |
|---|---|---|---|---|---|---|---|---|
| 1) Difference in refractive index between each PHBH and an acrylic core-shell type graft copolymer M-400 | | | | | | | | |

It is evident that, in the systems resulting from admixture of the core-shell type graft copolymer (b2) with the acrylic rubber as the core layer and the vinyl monomer-based polymer as the shell layer, resin compositions markedly improved in impact resistance and tensile elongation without sacrificing transparency and excellent in impact resistance, tensile properties and transparency can be obtained. It is also evident that, in the systems resulting from inorganic filler addition as well, resin compositions improved in impact resistance and tensile elongation and excellent in elasticity modulus in bending and thermal stability can be obtained.

### (Second aspect of the invention)

The following resins and additives were used in the examples relating to the second aspect of the invention.

### (Biodegradable polymers)

PLA: Poly(lactic acid), Product of Mitsui Chemicals, Inc., product name: Lacea H-100
PHBH: Poly[(3-hydroxybutyrate)-co-(3-hydroxyhexanoate)] (Sorbitol compounds)
Sorbitol compound 1: Bisbenzylidenesorbitol, product of New Japan Chemical Co., Ltd., product name: Gell All D Sorbitol compound 2: Bis (p-methylbenzylidene) sorbitol, product of New Japan Chemical Co., Ltd., product name: Gell All MD
Sorbitol compound 3: Bis(p-ethylbenzylidene)sorbitol, product of Mitsui Chemicals, Inc., product name: NC-4

### (Substituted urea compounds)

Substituted urea compound 1: Hexamethylenebisstearylurea, product of Nippon Kasei Chemical Co., Ltd., product name: Hakreen SH
Substituted urea compound 2: Xylylenebisstearylurea, product of Nippon Kasei Chemical Co., Ltd., product name: Hakreen SX Substituted urea compound Diphenylmethanebisstearylurea, product of Nippon Kasei Chemical Co., Ltd., product name: Hakreen SM

### (Inorganic fillers)

Inorganic filler 1: Talc, product of Nippon Talc Co., Ltd., product name: Rose Talc
Inorganic filler 2: Mica, product of Yamaguchi Mica Co., Ltd. , product name: A-41S

The evaluation methods employed in the Examples and Comparative Examples were as follows.

### <Processability measurement>

Using an injection molding machine (clamping pressure 80 t), each resin composition obtained was injection-molded under the conditions of a preset resin temperature of 130°C. and a preset mold temperature of 40°C to give moldings about 10 mm x 120 mm x 6.4 mm (thickness) in size, and the cooling time required for stable mold release in 10 shots was measured. The shorter the cooling time is, the better the processability is.

### <Heat distortion temperature (HDT) measurement>

Using an injection molding machine (clamping pressure 80 t), each resin composition obtained was injection-molded under the conditions of a preset resin temperature of 130°C and a preset mold temperature of 40°C to give moldings about 10 mm x 120 mm x 6.4 mm (thickness) in size.

The heat distortion temperature measurement was carried out according to JIS K 7207 (method A) under a load of 0.45 MPa. The higher the heat distortion temperature is, the better the molding is.

### <Dimensional stability>

Using an injection molding machine (clamping pressure 80 t), each resin composition obtained was injection-molded under the conditions of a preset resin temperature of 130°C and a preset mold temperature of 40°C to give flat sheet test specimens 120 mm x 120 mm x 2 mm (thickness) in size. After molding, the specimens were allowed to stand under the conditions of 23°C and 50% RH and, after 1 hour and 200 hours of standing, subjected to shrinkage percentage measurement. The smaller the difference between the shrinkage percentage after 1 hour and that after 200 hours is, the better the dimensional stability is.

### (Examples 12 to 17)

The PHBH used was a PHBH species (HH fraction about 6 mol %, Mw about 1,350,000) produced using, as the microorganism, Alcaligenes eutrophus AC 32 (J. Bacteriol., 179, 4821 (1997)) produced by introducing the Aeromonas caviae-derived PHA synthase gene into Alcaligenes eutrophus under adequately adjusted material and cultivation conditions. The "HH fraction" is the mole fraction (mol) of 3-hydroxyhexanoate in the PHBH.

The materials specified in Table 4 were dry blended according to each formulation (parts by weight), and the mixture was melted and kneaded at a preset cylinder temperature of 130°C in a twin-screw extruder (TEX 44, product of Japan Steel Works, Ltd.) to give a resin composition.

The resin compositions thus obtained were evaluated in the same manner as described above. The results are shown in Table 4.

### (Comparative Examples 6 to 9)

Resin compositions were obtained according to the formulations specified in Table 4 and following the same procedure as followed in Example 12. The resin compositions obtained were evaluated in the same manner as described above. The results are shown in Table 4.

**Table 4**

| | | Example | | | | | | Comparative Example | | | |
|---|---|---|---|---|---|---|---|---|---|---|---|
| | | 12 | 13 | 14 | 15 | 16 | 17 | 6 | 7 | 8 | 9 |
| PHBH (HH fraction 6 mol %) | Weight parts | 100 | 100 | 100 | 100 | 100 | 100 | 100 | 100 | | |
| PLA | Weight parts | | | | | | | | | 100 | 100 |
| Sorbitol compound 1 | Weight parts | 2 | | | | | | | | | |
| Sorbitol compound 2 | Weight parts | | 0.5 | 2 | 5 | 2 | | | | | |
| Sorbitol compound 3 | Weight parts | | | | | | 2 | | | | |
| Inorganic filler 1 | Weight parts | 33 | 33 | 33 | 33 | | 33 | 33 | | 33 | |
| Inorganic filler 2 | Weight | | | | | 33 | | | 33 | | 33 |
| Ash content | Weight ¼ | 24.6 | 25.1 | 24.8 | 24.7 | 25.0 | 24.8 | 25.1 | 24.7 | 25,1 | 25.0 |
| Cooling time for stable mold release Seconds 15 in 10 shots(*) | Seconds | 15 | 18 | 15 | 15 | 15 | 15 | 38 | 58 | 68 | 94 |
| Flexion under load (0.45 MPa) | °C | 115 | 112 | 121 | 119 | 126 | 117 | 110 | 102 | 56 | 58 |
| Shrinkage percentage, 1 hour after molding | % | 0,66 | 0.68 | 0.65 | 0.64 | 0.57 | 0.65 | 0.70 | 0.58 | 0.41 | 0.36 |
| Shrinkage percentage, 200 hours after molding | % | 0,68 | 0,73 | 0.68 | 0.66 | 0.62 | 0.69 | 0.81 | 0.75 | 0.48 | 0.46 |
| Difference in shrinkage percentage | % | 0.02 | 0.05 | 0.03 | 0.02 | 0.05 | 0.04 | 0.11 | 0.17 | 0.07 | 0.10 |

| | | | | | | | | | | | |
|---|---|---|---|---|---|---|---|---|---|---|---|
| (*) Since it took 13 seconds for weighing and injection, 15 seconds was taken as the minimum cooling time. | | | | | | | | | | | |

The results shown in Table 4 indicate that the addition of the sorbitol compounds improves the processability and thermal stability of the aliphatic polyester type biodegradable polymer-based resin composition. It is evident that such effects are higher as compared with the commercially available PLA type material, for example.

### (Examples 18 to 23)

The PHBH used was a PHBH species (HH fraction about 6 mol %, Mw about 1,350,000) produced using, as the microorganism, Alcaligenes eutrophus AC 32 (J. Bacteriol., 179, 4821 (1997)) produced by introducing the Aeromonas caviae-derived PHA synthase gene into Alcaligenes eutrophus under adequately adjusted material and cultivation conditions. The "HH fraction" is the mole fraction (mol %) of 3-hydroxyhexanoate in the PHBH.

The materials specified in Table 5 were dry blended according to each formulation (parts by weight), and the mixture was melted, and kneaded at a preset cylinder temperature of 130°C in a twin-screw extruder (TEX 44, product of Japan Steel Works, Ltd.) to give a resin composition.

The resin compositions thus obtained were evaluated in the same manner as described above. The results are shown in Table 5.

### (Comparative Examples 10 to 13)

Resin compositions were obtained according to the formulations specified in Table 5 and following the same procedure as followed in Example 18. The resin compositions obtained were evaluated in the same manner as described above. The results are shown in Table 5.

**Table 5**

| | | Example | | | | | | Comparative Example | | | |
|---|---|---|---|---|---|---|---|---|---|---|---|
| | | 18 | 19 | 20 | 21 | 22 | 23 | 10 | 11 | 12 | 13 |
| PHBH(HH fraction 6 mol %) | Weight parts | 100 | 100 | 100 | 100 | 100 | 100 | 100 | 100 | | |
| PLA(Polylactic acid) | weight parts | | | | | | | | | 100 | 100 |
| Substituted urea compound 1 | Weight parts | 0.5 | 2 | 5 | 2 | | | | | | |
| Substituted urea compound 2 | height parts | | | | | 2 | | | | | |
| Substituted urea compound 3 | weight parts | | | | | | 2 | | | | |
| Inorganic filler 1 | Weight parts | 33 | 33 | 33 | | 33 | 33 | 33 | | 33 | |
| Inorganic filler 2 | Weight parts | | | | 33 | | | | 33 | | 33 |
| content | Weight % | 25.2 | 24.9 | 24.8 | 25.1 | 24.7 | 24.9 | 25.1 | 24.9 | 25.3 | 25.3 |
| Cooling time for stable mold release in 10 shots(*) | Seconds | 23 | 18 | 15 | 20 | 19 | 21 | 42 | 62 | 73 | 93 |
| Flexion temperature under load (0.45 MPa) | °C | 110 | 119 | 121 | 125 | 117 | 115 | 108 | 100 | 57 | 56 |
| Shrinkage percentage. 1 hour after molding | % | 0.70 | 0.67 | 0.65 | 0.69 | 0.71 | 0.72 | 0.71 | 0.59 | 0.41 | 0.36 |
| Shrinkage percentage. 200 hours after molding | % | 0.75 | 0.70 | 0.67 | 0.73 | 0.76 | 0.77 | 0.83 | 0.77 | 0.49 | 0.47 |
| Difference in shrinkage percentage | % | 0.05 | 0.03 | 0.02 | 0.04 | 0.05 | 0.05 | 0.12 | 0.18 | 0.08 | 0.11 |

| | | | | | | | | | | | |
|---|---|---|---|---|---|---|---|---|---|---|---|
| (*) Since it took 13 seconds for weighing and injection, 15 seconds was taken as the minimum cooling time. | | | | | | | | | | | |

The results shown in Table 5 indicate that the addition of the substituted urea compounds improves the processability and thermal stability of the aliphatic polyester type biodegradable polymer-based resin composition. It is evident that such effects are higher as compared with the commercially available PLA type material, for example.

### INDUSTRIAL APPLICABILITY

The resin compositions according to the invention are made into such moldings as various fibers, yarns, ropes, woven fabrics, knit fabrics, nonwoven fabrics, paper, films, sheets, tubes, plates, rods/bars, containers, bags, parts and foams, and such moldings are used singly as such or used to produce composites together with various fibers, yarns, ropes, woven fabrics, knit fabrics, nonwoven fabrics, paper, films, sheets, tubes, boards, rods/bars, containers, bags, parts and foams made of a separate material other than those compositions to thereby attain improvements in physical properties as compared with the single use thereof. The thus-obtained moldings can be suitably used in the fields of agriculture, fishery, forestry, horticulture, medicine, sanitary items, food industry, clothing, non-clothing, packaging, automobiles, building materials and the like.

## Claims

1. A resin composition
which comprises
(A) an aliphatic polyester type biodegradable polymer and
(B) at least one copolymer selected from the group consisting of composite rubber graft copolymers (b1) and core-shell type graft copolymers (b2),
in which the composite rubber graft copolymers (b1) are copolymers resulting from graft polymerization of a vinyl monomer(s) onto a composite rubber composed of a polyorganosiloxane component and a poly[alkyl(meth)acrylate] component,
in which each particle of the core-shell type graft copolymers (b2) comprise an acrylic rubber as the core layer and a vinyl monomer(s)-derived polymer as the shell layer and
in which the resin composition comprises 50 to 99% by weight of the component (A) and 50 to 1% by weight of the component (B), relative to the total weight (100% by weight) of the component (A) and component (B).

2. The resin composition according to Claim 1
wherein the aliphatic polyester type biodegradable polymer is a biodegradable (3-hydroxyalkanoate) copolymer composed of repeating units represented by the formula: [-CHR-CH₂-CO-O-] (wherein R represents an alkyl group represented by CₙH₂ₙ₊₁ in which n is an integer of 1 to 15).

3. The resin composition according to Claim 2
wherein the (3-hydroxyalkanoate) copolymer is poly[(3-hydroxybutyrate)-co-(3-hydroxyhexanoate)] composed of (3-hydroxybutyrate) repeating units and (3-hydroxyhexanoate) repeating units.

4. The resin composition according to Claim 2 or 3
wherein the (3-hydroxyalkanoate) copolymer has a weight average molecular weight of 300,000 to 3,000,000.

5. The resin composition according to Claim 3 or 4
wherein the repeating unit content ratio in the poly[(3-hydroxybutyrate)-co-(3-hydroxyhexanoate)], namely the ratio (3-hydroxybutyrate) units/(3-hydroxyhexanoate) units, is 99/1 to 80/20 (mol/mol).

6. The resin composition according to any one of Claims 1 to 5
wherein the vinyl monomer(s) in the composite rubber graft copolymers (b1) comprises or comprise 70 to 100% by weight of at least one vinyl monomer selected from the group consisting of vinyl cyanide monomers, aromatic vinyl monomers, acrylate esters and methacrylate esters and 30 to 0% weight of another or other vinyl monomers copolymerizable therewith.

7. The resin composition according to any one of Claims 1 to 6
wherein the difference in refractive index between the core-shell type graft copolymers (b2) and the aliphatic polyester type biodegradable polymer is not greater than 0.02.

8. The resin composition according to any one of Claims 1 to 7
wherein the resin composition further comprises as a nucleating agent, at least one compound selected from the group consisting of fatty acid amides, urea derivatives and sorbitol compounds in an amount of 0.1 to 10 parts by weight relative to the total weight (100 parts by weight) of the component (A) and component (B).

9. The resin composition according to any one of Claims 1 to 8
wherein, the resin composition has an average crystalline particle diameter of not greater than 50 µm.

10. The resin composition according to any one of Claims 1 to 9
wherein the resin composition further comprises 0.1 to 100 parts by weight of a filler relative to the total weight (100 parts by weight) of the component (A) and component (B).

11. An injection molding, extrusion molding, blow molding, expansion molding, film and sheet-like molding formed from the resin composition according to any one of Claims 1 to 10 as well as a vacuum molding or press molding formed from the above moldings.

12. A resin composition
which comprises
(A) an aliphatic polyester type biodegradable polymer and
(C) at least one compound selected from the group consisting of sorbitol compounds (c1) having a chemical structure represented by the general formula (1): m 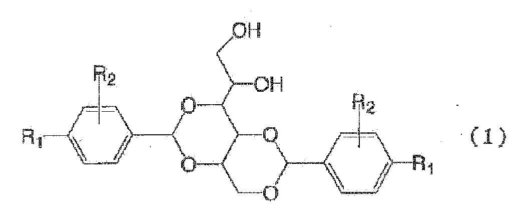 (wherein R₁ and R₂ may be the same or different and each independently represents a hydrogen atom, a halogen atom(s) selected from the group consisting of F, Cl and Br, or an alkyl or alkoxy group containing 1 to 6 carbon atoms which alkyl or alkoxy group may optionally be substituted at least partly by a hydroxyl group(s) and/or a halogen atom(s) selected from the group consisting of F, Cl and Br), and urea bond-containing substituted urea compounds (c2).

13. The resin composition according to Claim 12
wherein the sorbitol compound (c1) is one or more species selected from the group consisting of bisbenzylidenesorbitol, bis(p-methylbenzylidene)sorbitol, bis(p-ethylbenzylidene)sorbitol and bis(p-chlorobenzylidene)sorbitol.

14. The resin composition according to Claim 13
wherein the substituted urea compound (c2) is one or more species selected from among xylylenebisstearylurea, toluylenebisstearylurea, hexamethylenebisstearylurea and diphenylmethanebisstearylurea.

15. The resin composition according to any one of Claims 12 to 14
wherein the content of the (C) component is 0.1 to 5 parts by weight per 100 parts per weight of the aliphatic polyester type biodegradable polymer (A)

16. The resin composition, according to any one of Claims 12 to 15
wherein the aliphatic polyester type biodegradable polymer (A) is a poly(3-hydroxyalkanoate) copolymer produced by a microorganism and composed of repeating units represented by the formula: [-CHR-CH₂-CO-O-] (wherein R represents an alkyl group represented by CₙH₂ₙ₊₁ in which n is an integer of 1 to 15).

17. The resin composition according to Claim 16
wherein the poly(3-hydroxyalkanoate) copolymer is poly[(3-hydroxybutyrate)-co-(3-hydroxyhexanoate)] composed of (3-hydroxybutyrate) repeating units and (3-hydroxyhexanoate) repeating units.

18. The resin composition according to Claim 17
wherein the copolymer component content ratio in the poly[(3-hydroxybutyrate)-co-(3-hydroxyhexanoate)], namely the ratio poly(3-hydroxybutyrate)/poly(3-hydroxyhexanoate), is 99/1 to 80/20 (mol/mol).

19. The resin composition according to any one of Claims 12 to 18
wherein 0.1 to 100 parts by weight, per 100 parts by weight of the aliphatic polyester type biodegradable polymer, of an inorganic filler are incorporated in the composition.

20. The resin composition according to any one of Claims 12 to 19
wherein 0.1 to 100 parts by weight, per 100 parts by weight of the aliphatic polyester type biodegradable polymer, of natural fibers are incorporated in the composition.

21. The resin composition according to Claim 20
wherein the natural fiber is Kenaf fiber.
